# EUROPEAN PATENT SPECIFICATION

(11) **EP 1 665 393 B1**
(45) Date of publication and mention of the grant of the patent: **27.05.2009**
(21) Application number: 04781941.2
(22) Date of filing: 19.08.2004
(51) Int. Cl.: H01L 31/048

(54) **PV wind performance enhancing methods**
PV-Windleistungsverbesserungsverfahren
Procédés d'amélioration de l'efficacité de vent photovoltaïque

(30) Priority: 20.08.2003 US 496476 P; 05.11.2003 US 517438 P
(43) Date of publication of application: 07.06.2006
(60) Divisional application: 09000666.9
(73) Proprietor: SunPower Corporation, Systems, Berkeley CA 94702 (US)
(72) Inventor: DINWOODIE, Thomas, L., Piedmont, CA 94611 (US); O'BRIEN, Colleen, Berkely, CA 94710 (US); NEFF, David, E., Fort Collins, CO 80521 (US); MASCOLO, Gianluigi, Danville, CA 94526 (US)
(74) Representative: Grünecker, Kinkeldey, Stockmair & Schwanhäusser Anwaltssozietät
(86) International application number: PCT/US2004/027351
(87) International publication number: WO 2005/020290

(56) References cited:
- DE-A1- 4 228 937
- US-A- 5 746 839
- US-B1- 6 495 750

## Description

### BACKGROUND OF THE INVENTION

Air moving across an array of photovoltaic (PV) assemblies mounted to the roof of a building, or other support surface, creates wind uplift forces on the PV assemblies. Much work has been done in the design and evaluation of arrays of PV assemblies to minimize wind uplift forces. See U.S. Patent Nos. 5,316,592; 5,505,788; 5,746,839; 6,061,978; 6,148,570; 6,495,750; 6,534,703; 6,501,013; 6,570,084 and patent WO 02/167 07. Reducing wind uplift forces provides several advantages. First, it reduces the necessary weight per unit area of the array. This reduces or eliminates the need for strengthening the support surface to support the weight of the array, thus making retrofit easier and reducing the cost for both retrofit and new construction. Second, it reduces or eliminates the need for the use of roof membrane- (or other support surface-) penetrating fasteners; this helps to maintain the integrity of the membrane. Third, the cost of transporting and installing the assembly is reduced because of its decreased weight. Fourth, lightweight PV assemblies are easier to install than assemblies that rely on ballast weight to counteract wind uplift forces. Fifth, when appropriately designed, the assembly can serve as a protective layer over the roof membrane or support surface, shielding from temperature extremes and ultraviolet radiation.

### BRIEF SUMMARY OF THE INVENTION

A first example; not part of the invention, is a method for enhancing pressure equalization between upper and lower surfaces of PV modules of an array of PV modules. An array of PV modules, supportable on and arrangeable generally parallel to a support surface by support members, is chosen. The array of PV modules defines a circumferentially closed perimeter, an array air volume V defined between the array of PV modules and the support surface, a module gap area MGA defined between the PV modules, and a perimeter gap area PGA defined along the perimeter between the PV modules and the support surface. A ratio R, where R = V divided by (MGA + PGA), is determined. If ratio R is not less than a chosen ratio, then at least one of V, MGA and PGA is changed and the determining step is repeated.

The invention is directed to a method for achieving adequate pressure equalization between upper and lower surfaces of PV modules of an array of PV modules. An array of PV modules, supportable on and arrangeable generally parallel to a support surface by support members, is chosen. The array of PV modules defines a circumferentially closed perimeter. An array air volume V, defined between the array of PV modules and the support surface, is calculated. An interior array gap area IGAP, defined as the sum of all gap areas between solid surfaces located within the array when viewed from vertically above the array, is calculated. A perimeter gap area PGAP, defined as the lesser of 1) the area between the top edges of the PV modules and the roof surface or 2) the area between the top edges of the PV modules and any perimeter deflector device, is calculated. A ratio R, R = V divided by (IGAP + PGAP), is determined. If ratio R is not less than a chosen ratio, then at least one of V, IGAP and PGAP is changed and the determining step is repeated.

A third example, not part of the invention, is directed to a method for enhancing pressure equalization between upper and lower surfaces of PV modules of an array of PV modules. An array of PV assemblies, supportable on a support surface, is chosen. At least some of said PV assemblies comprise (1) an inclined PV module having a lower edge, an upper edge and inclined side edges joining the lower and upper edges, and (2) an air deflector having inclined deflector side edges and an upper deflector edge opposite the upper edge of the inclined PV module and defining a gap therebetween. The array of PV assemblies defines a circumferentially closed perimeter, an array air volume V defined between the array of PV assemblies and the support surface, a module gap area MGA defined between the PV modules, a perimeter gap area PGA defined along the perimeter between the PV assemblies and the support surface, a deflector/deflector gap area D/DGA defined between opposed ones of the inclined deflector side edges, and an air deflector gap area ADGA defined between the upper edges of the air deflectors and the upper edges of the PV modules. A ratio R, R = V divided by (MGA + ADGA+PGA+ D/DGA), is determined. If ratio R is not less than a chosen ratio, then at least one of V, MGA, ADGA, PGA and D/DGA is changed and the determining step is repeated.

A fourth example, not part of the invention, is directed to a method for enhancing pressure equalization between upper and lower surfaces of PV modules of an array of PV modules. An array of PV assemblies, supportable on a support surface, is chosen. At least some of said PV assemblies comprise (1) an inclined PV module having a lower edge, an upper edge and inclined side edges joining the lower and upper edges, and (2) an air deflector having inclined deflector side edges and an upper deflector edge opposite the upper edge of the inclined PV module and defining a gap therebetween, the array of PV assemblies defining a circumferentially closed perimeter. An array air volume V, defined between the array of PV assemblies and the support surface, is chosen. An interior array gap area IGAP, defined as the sum of all gap areas between solid surfaces located within the array when viewed from vertically above the array, is calculated. A perimeter gap area PGAP, defined as the lesser of 1) the area between the top edges of the PV modules and deflectors and the roof surface or 2) the area between the top edges of the PV modules and any perimeter deflector device, is calculated. Any obstructions by any supports are accounted for by deducting any areas blocked by supports when calculating IGAP and PGAP. A ratio R, R = V divided by (IGAP + PGAP), is determined. If ratio R is not less than a chosen ratio, then at least one of V, IGAP and PGAP is changed and the determining step is repeated.

A fifth example, not part of the invention, is directed to a method for enhancing pressure equalization between upper and lower surfaces of PV modules of an array of PV modules. An array of PV assemblies supportable on a support surface is chosen. At least some of said PV assemblies comprise (1) an inclined PV module having a lower edge, an upper edge and inclined side edges joining the lower and upper edges, and (2) an air deflector having inclined deflector side edges and an upper deflector edge opposite the upper edge of the inclined PV module and defining a gap therebetween. The array of PV assemblies define a circumferentially closed perimeter, an array air volume V defined between the array ofPV assemblies and the support surface, a module gap area MGA defined between the PV modules, a perimeter gap area PGA defined along the perimeter between the PV assemblies and the support surface, a deflector/deflector gap area D/DGA defined between opposed ones of the inclined deflector side edges, and an air deflector gap area ADGA defined between the upper edges of the air deflectors and the upper edges of the PV modules. The presence of any airflow hindering elements situated to hinder airflow into and/or out of array air volume V is determined. A ratio R, R = V divided by (MGA + ADGA+PGA+ D/DGA), is determined. If ratio R is not less than a chosen ratio, then at least one of V, MGA, ADGA, PGA-and D/DGA is changed and the determining step is repeated. Prior to the ratio R determining step, at least one of MGA and PGA may be adjusted downwardly based upon the results of the airflow hindering determining step.

A sixth example, not part of the invention, is directed to a method for enhancing pressure equalization between upper and lower surfaces of PV modules of an array of PV modules. An array of PV assemblies, supportable on a support surface, is chosen. At least some of said PV assemblies comprise (1) an inclined PV module having a lower edge, an upper edge and inclined side edges joining the lower and upper edges, and (2) an air deflector having inclined deflector side edges and an upper deflector edge opposite the upper edge of the inclined PV module and defining a gap therebetween. The array of PV assemblies defines a circumferentially closed perimeter. An array air volume V, defined between the array of PV assemblies and the support surface is calculated. An interior array gap area IGAP, defined as the sum of all gap areas between solid surfaces located within the array when viewed from vertically above the array, is calculated. A perimeter gap area PGAP, defined as the lesser of 1) the area between the top edges of the PV modules and deflectors and the roof surface or 2) the area between the top edges of the PV modules and any perimeter deflector device, is calculated. The presence of any airflow hindering elements situated to hinder airflow into and/or out of array air volume V is determined. A ratio R, R = V divided by (IGAP + PGAP), is determined. If ratio R is not less than a chosen ratio, then at least one of V, IGAP and PGAP is changed and the determining step is repeated. Prior to the ratio R determining step, at least one of IGAP and PGAP may be adjusted downwardly based upon the results of the airflow hindering determining step.

A seventh example, not part of the invention, is directed to a PV installation comprising a support surface, an array of PV modules, comprising PV modules having upper and lower surfaces, and PV module supports supporting the PV modules on and generally parallel to the support surface. The array of PV modules defines a circumferentially closed perimeter. A perimeter air deflector is positioned outwardly of the perimeter. An array air volume is V defined between the array of PV modules and the support surface. A module gap area MGA is defined between the PV modules. A perimeter gap area PGA is defined along the perimeter between the PV modules and the support surface. The PV installation defines a ratio R, R = V divided by (MGA + PGA), R being less than a chosen ratio, the chosen ratio being no more than 20, whereby pressure equalization between upper and lower surfaces of PV modules of the array of PV modules is enhanced.

An eighth example, not part of the invention, is directed to a PV installation comprising a support surface, an array of PV modules, comprising PV modules having upper and lower surfaces, and PV module supports supporting the PV modules on and generally parallel to the support surface. The array of PV modules defines a circumferentially closed perimeter. A perimeter air deflector is positioned outwardly of the perimeter. An array air volume is V defined between the array of PV modules and the support surface. An interior array gap area IGAP is defined as the sum of all gap areas between solid surfaces located within the array when viewed from vertically above the array. A perimeter gap area PGAP is defined as the lesser of 1) the area between the top edges of the PV modules and deflectors and the roof surface or 2) the area between the top edges of the PV modules and any perimeter deflector device. The PV installation defines a ratio R, R = V divided by (IGAP + PGAP), R being less than a chosen ratio, the chosen ratio being no more than 20, whereby pressure equalization between upper and lower surfaces of PV modules of the array of PV modules is enhanced.

A ninth example, not part of the invention, is directed to a PV installation comprising a support surface, an array of PV assemblies and PV assembly supports supporting the PV assemblies on the support surface. The array of PV assemblies comprises PV modules having upper and lower surfaces, at least some of said PV assemblies comprising (1) an inclined PV module having a lower edge, an upper edge and inclined side edges joining the lower and upper edges, and (2) an air deflector having deflector side edges and an upper deflector edge opposite the upper edge of the inclined PV module and defining a gap therebetween. The array of PV assemblies defines a circumferentially closed perimeter. An array air volume V is defined between the array of PV assemblies and the support surface. A module gap area MGA is defined between the PV modules. A perimeter gap area PGA is defined along the perimeter between the PV assemblies and the support surface. A deflector/deflector gap area D/DGA is defined between opposed ones of the inclined deflector side edges. An air deflector gap area ADGA is defined between the upper edges of the air deflectors and the upper edges of the PV modules. The PV installation defines a ratio R, R = V divided by (MGA + ADGA+PGA+ D/DGA), R being less than a chosen ratio, the chosen ratio being no more than 20, whereby pressure equalization between upper and lower surfaces of PV modules of the array of PV modules is enhanced.

A tenth example, not part of the invention, is directed to a PV installation comprising a support surface, an array of PV assemblies and PV assembly supports supporting the PV assemblies on the support surface. The array of PV assemblies comprises PV modules having upper and lower surfaces, at least some of said PV assemblies comprising (1) an inclined PV module having a lower edge, an upper edge and inclined side edges joining the lower and upper edges, and (2) an air deflector having deflector side edges and an upper deflector edge opposite the upper edge of the inclined PV module and defining a gap therebetween. The array of PV assemblies defines a circumferentially closed perimeter. An array air volume V is defined between the array of PV assemblies and the support surface. An interior array gap area IGAP is defined as the sum of all gap areas between solid surfaces located within the array when viewed from vertically above the array. A perimeter gap area PGAP is defined as the lesser of 1) the area between the top edges of the PV modules and deflectors and the roof surface or 2) the area between the top edges of the PV modules and any perimeter deflector device. The PV installation defines a ratio R, R = V divided by (IGAP + PGAP), R being less than a chosen ratio, the chosen ratio being no more than 20. Whereby pressure equalization between upper and lower surfaces of PV modules of the array of PV modules is enhanced. The PV installation may also include side air deflectors along a portion of the perimeter opposite the inclined side edges of a plurality of said inclined PV modules and a deflector/module gap area D/MGA between the side air deflectors and the perimeter; whereby when D/MGA is less than PGA, then a ratio RX, RX = V divided by (MGA + D/MGA), is less than the chosen ratio.

An eleventh example, not part of the invention, is directed to a PV installation comprising a support surface, a PV assembly and a PV assembly support supporting the PV assembly on and directly opposite the support surface. The PV assembly comprises a front edge, a back edge, and first and second side edges joining the front and back edges, the edges defining a PV assembly periphery. The PV assembly periphery and the support surface define a preliminary gap area therebetween. At least a first portion of the PV assembly periphery is spaced apart from the support surface by at least a first distance. An air volume V is defined between the PV assembly and the support surface. The PV assembly comprises an air deflector located along at least substantially the entire first portion of the periphery and blocking a portion of the preliminary gap area so to define an effective gap area (EGA) opening into the air volume. Whereby pressure equalization between upper and lower surfaces of PV modules of the array of PV modules is enhanced while reducing uplift forces created by wind flow over the PV modules.

A twelfth example, not part of the invention, is directed to a PV installation comprising a support surface and an array of PV modules, said array comprising at least three rows of PV modules. A first path is defined between a first pair of the rows and a second path defined between a second pair of the rows. Supports are used to support the PV modules on the support surface. First and second tracks are positioned along the first and second paths. An access cart is supported on and movable along the first and second tracks. Whereby access to at least a portion of at least one row of PV modules is obtained. The access cart may comprise a PV module cleaning device. The PV module cleaning device may comprise a global positioning system (GPS) PV module cleaning device whereby cleaning of the array may be tracked according to a GPS position.

### BRIEF DESCRIPTION OF THE DRAWINGS

Figs.1 and 2 are simplified top plan and side elevational views of a PV installation;

Fig. 3 is a view on to Fig.1 showing the module gap area as crosshatched;

Fig. 4 is a view similar to Fig. 2 showing the perimeter gap area as crosshatched;

Fig. 5 is a view similar to Fig. 3 showing the deflector/module gap area;

Fig. 6 an is a view similar to Fig. 4 showing the module gap and perimeter gap;

Figs. 7 and 8 are views similar to Figs. 5 and 6 illustrating how the volume of air beneath the array of PV modules is determined;

Figs. 9 and 10 are views similar to Figs.1 and 2 showing inclined PV modules and rear air deflectors, the right-most side air deflector being removed in Fig. 10 for clarity; Figure 11 is a slide view of the PV modules of Fig. 9;

Figs. 12 and 13 are views similar to Figs. 9 and 10 using crosshatching to show module gap areas, air deflector gap areas and perimeter gap areas;

Figs. 14 and 15 are similar to Fig. 12 with Fig. 14 showing deflectors/module gap areas and Fig. 15 showing deflectors/deflector gap areas;

Fig. 16 plots pressure equalization time versus the ratio of the air volume beneath the array to the unobstructed gap areas;

Fig. 17 plots displacement versus the ratio of the air volume beneath the array to the unobstructed gap areas;

Figs. 18-20 are plots of the calculated vertical displacement of three different sizes of PV assemblies versus the height of the PV assemblies above the support surface for three different PV to PV gaps;

Figs. 21A and 21B illustrate the pressure equalization time for a number of different designs of PV assemblies calculated for different perimeter conditions, 0% open, 25% open and 100% open;

Fig.21C is a chart identifying the calculations used to create the graphs of Figs. 21A and 21B;

Fig. 22A is a simplified side elevational view of a PV assembly having a relatively non-aerodynamic support frame;

Fig. 22B is enlarged view of one end of the assembly of Fig. 22A;

Fig. 22C through 22F are views similar to Fig. 22A and 22B of alternative examples having more aerodynamic support frames;

Fig. 23A is a simplified side elevational view of a PV assembly having a relatively non-aerodynamic structural member;

Fig. 23B is enlarged view of one end of the assembly of Fig. 23A;

Fig. 23C is an end view of the structure of Fig. 23B illustrating the non-aerodynamic shape of the structural member;

Fig. 23D through 23F are views similar to Fig. 23A through 23C of an alternative example having a more aerodynamic structural member;

Figs. 24A and 24B each shows a pair of interengaging PV assemblies with the assemblies of Fig. 24B having a larger gap than the assemblies of Fig. 24A to help promote airflow from beneath the assemblies to reduce pressure equalization time;

Fig. 25 illustrates use of channels beneath the PV assemblies of Fig. 24B to promote airflow beneath the assemblies;

Fig. 26 and 26A are isometric and plan views of an array of sloped PV modules made according to the invention facilitate field assembly;

Figs. 26B, 27,28 and 29 are is enlarged views of different portions of the assembly of Fig. 26;

Fig. 29A is underside view of the structure of Fig. 29;

Fig. 29B is enlarged view of a portion of the structure of Fig. 29A showing the end- most support with the upper support arm not attached to anything;

Fig. 29C is an underside, reverse angle view of the uppermost support of Fig. 29 illustrating its attachment to a fastener;

Fig. 29D is a view similar to that of Fig. 29C but taken between two adjacent rows of PV modules;

Fig. 29E is a view similar to that of Fig. 29B but taken between two adjacent rows of PV modules;

Fig.30 is an enlarged side view showing the junction of a PV module and the overlapping edges of adjacent air deflectors;

Fig. 31 is an enlarged side view of a portion of the structure of Fig. 26B;

Fig. 32 is a view similar to Fig. 31 showing the use of an extended side air deflector;

Fig. 33 is an end view illustrating an angled side air deflector as an alternative to the generally vertical side air deflector of Fig. 26B;

Fig. 34 illustrates a PV installation made according to a further aspect of the invention in which the supports not only support the PV modules by also act as tracks for an access cart;

Fig. 35 and 36 are side and enlarged side views of a portion of the installation of Fig. 34; and

Fig. 37 illustrates an alternative PV module, specifically a light concentrator type of PV module, for use with the present invention.

### DETAILED DESCRIPTION OF THE INVENTION

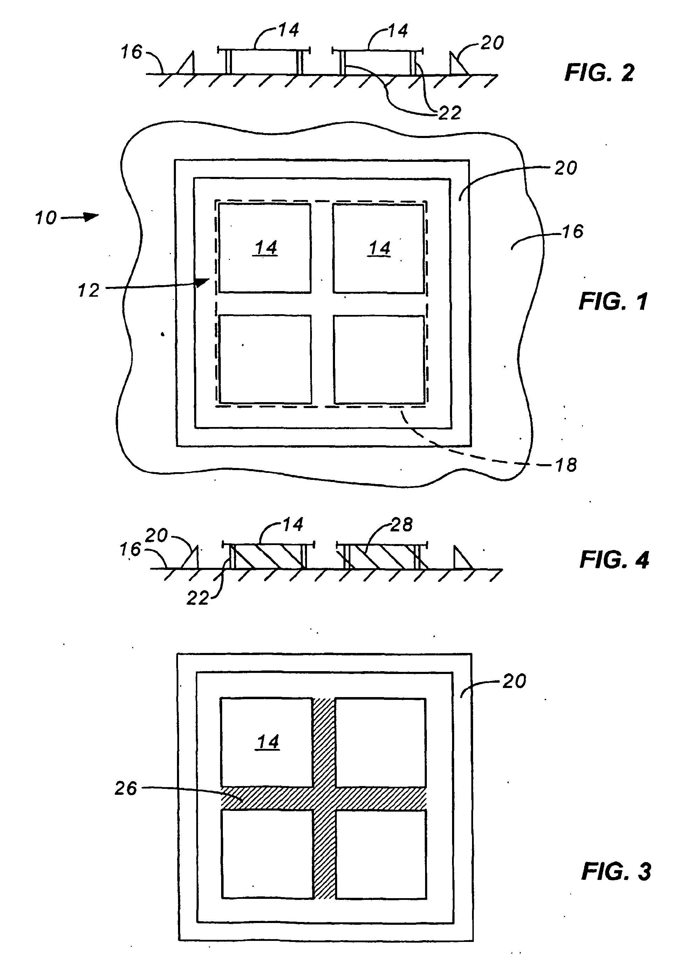

Figs.1 and 2 are top plan and side elevational views of a PV installation 10, installation 10 including an array 12 of PV modules 14 supported by a support surface 16, typically the roof of a building. Array 12 of PV modules 14 define a circumferentially closed perimeter 18. Installation 10 also includes a perimeter air deflector 20 surrounding and spaced apart from perimeter 18 and PV modules supports 22 supporting PV modules 14 above a support surface 16. The general construction of PV installation 10 may be conventional, such as disclosed in one or more of the above-referenced patents with exemplary possible modifications discussed below. For example, PV modules 14 are preferably interconnected to one another to enhance resistance to wind uplift forces. The number, shape, orientation and arrangement of PV modules 14, as well as perimeter air deflector 20 and supports 22, may be changed from that illustrated, PV installation 10 being a simplified exemplary installation used to help the reader.

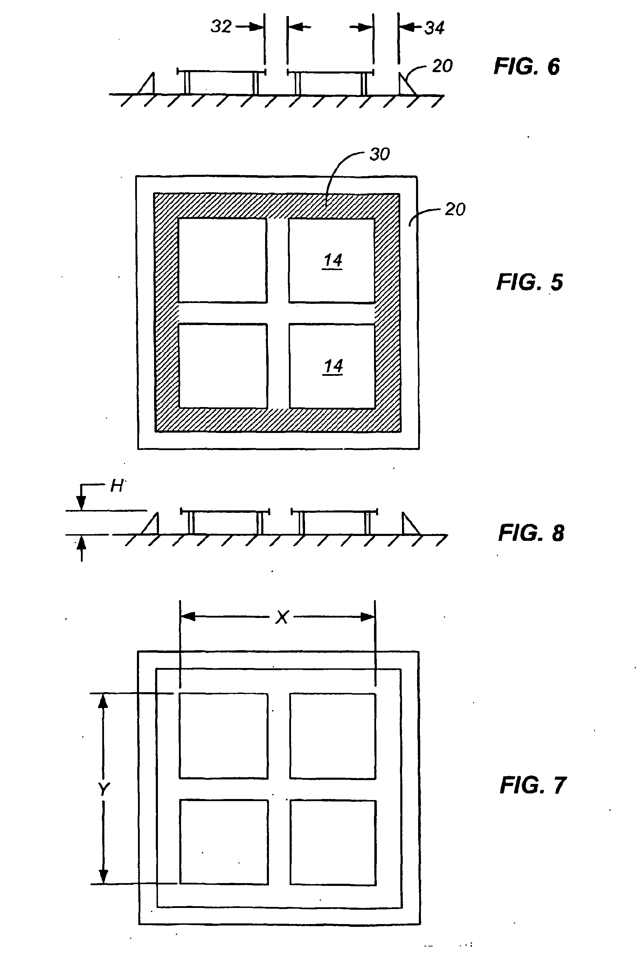

Figs. 3-8 are used to identify certain areas, volumes, dimensions and regions associated with PV installation 10. Fig. 3 illustrates a module gap area (MGA) 26 defined between PV modules 14. Fig. 4 shows a perimeter gap area (PGA) 28. Assuming support surface 16 is horizontal, perimeter gap area 28 will be a vertically extending area between PV modules 14 and support surface 16 along perimeter 18. Fig. 5 illustrates a deflector/module gap area (D/MGA) 30 defined between perimeter 18 and perimeter air deflector 20. Fig. 6 illustrates a module gap 32 and a perimeter gap 34. Figs. 7 and 8 illustrates how the air volume beneath array 12 is calculated. That is, the area of perimeter 18 is determined by multiplying dimension X dimension Y and then the air volume V is found by multiplying the product by height H. Note that when an insulating base is used with PV modules 14, so that the insulating base lies against support surface 16 and an air space is created between the insulating base and PV modules 14, the air volume calculation is typically adjusted to remove the volume of the base from air volume V.

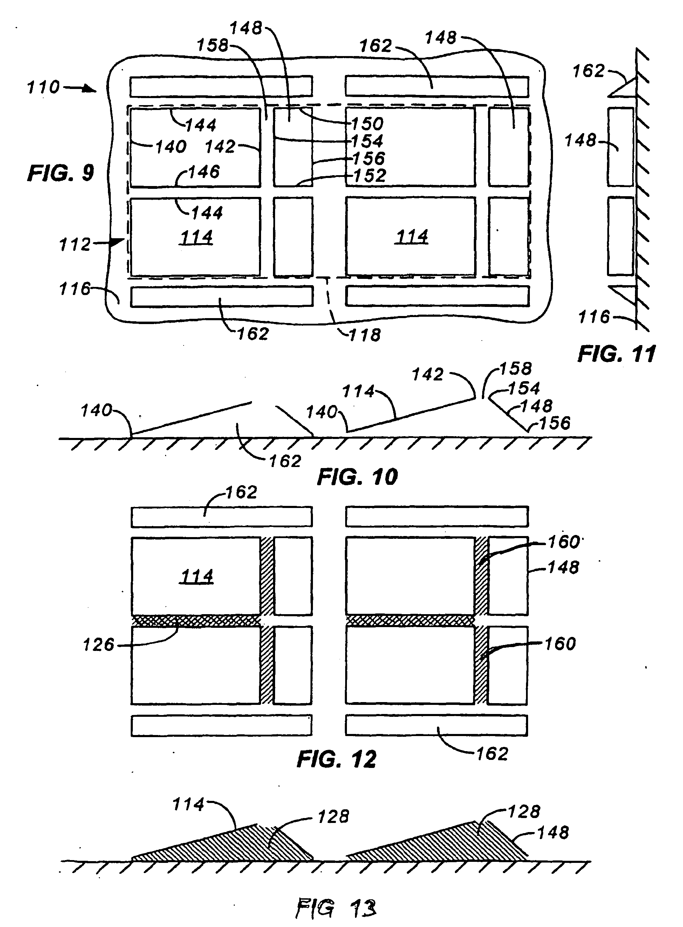

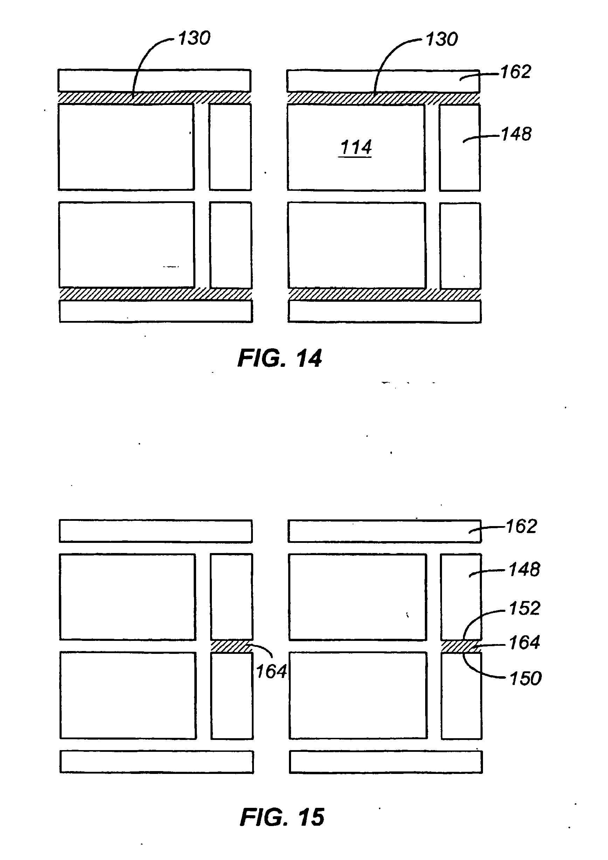

Figs. 9-15 illustrate PV installation 110 with like reference numerals (for example 10 versus 110) referring to like elements. Installation 110 uses sloped PV modules 114 having lower and upper edges 140,142 and inclined to side edges 144,146. Installation 110 also includes air deflectors 148, each air deflector 148 having inclined deflector side edges 150,152, an upper deflector edge 154 opposite upper edge 142 and a lower deflector edge 156. Edges 142, 154 define a gap 158 and air deflector gap area (ADGA) 160, see Fig. 12, therebetween. Typically the distance between edges 140 and 156 and support surface 116 is sufficiently small so that an air deflector is not needed along those edges. However, side air deflectors 162 are used along perimeter 118 opposite side edges 144,146, 150,152. A deflector/deflector gap area (D/DGA) 164 is defined between opposed deflector side edges 150,152 as shown in Fig. 15. Air volume V for the sloped PV modules of Figs. 9-15 is the air volume bounded by support surface 116, perimeter gap areas (PGA)128, and the undersides of PV modules 114 and air deflectors 148.

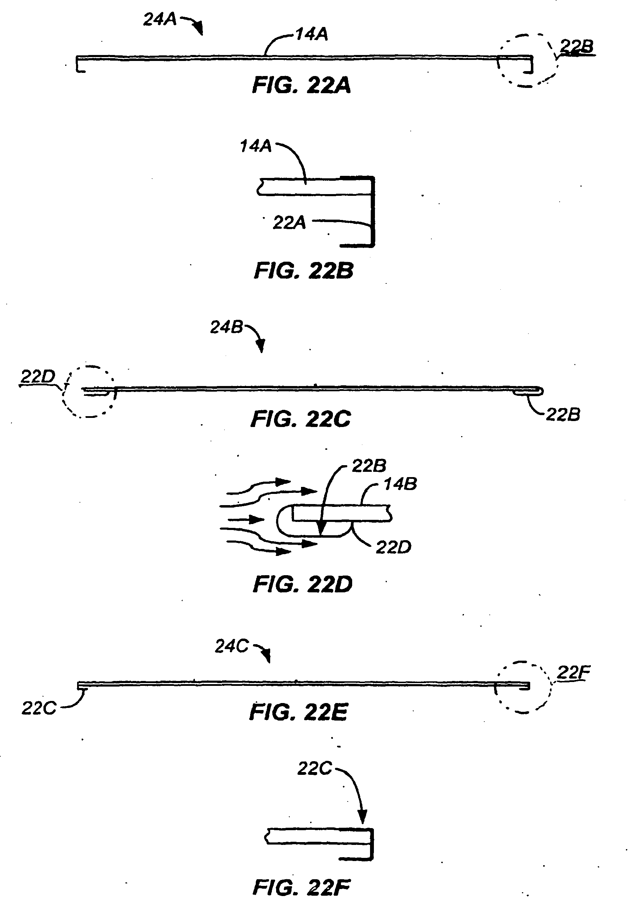

Figs. 22A and 22B illustrate a PV assembly 24A comprising a PV module 14A secured to a relatively non-aerodynamic support frame 22A. Support frame 22A is both flat and relatively tall, for example about 4 cm tall. In contrast, PV assembly 24B of Figs. 22C and 22D show a support frame 22B having an aerodynamic shape, that is more rounded and shorter, about 1.3 cm tall, than support frame 22A. Figs. 22E and 22F show a PV assembly 24C having a support frame 22C that is more an aerodynamic than support frame 22A, being about one third as tall as support frame 22, but perhaps not as aerodynamic as the rounded support frame 22B of Figs. 22C and 22D. An advantage of support frame 228 over support frame 22C is that the inner edge 22D of support frame 22B is rounded, which enhances the aerodynamic qualities of the inner portion of the support frame.

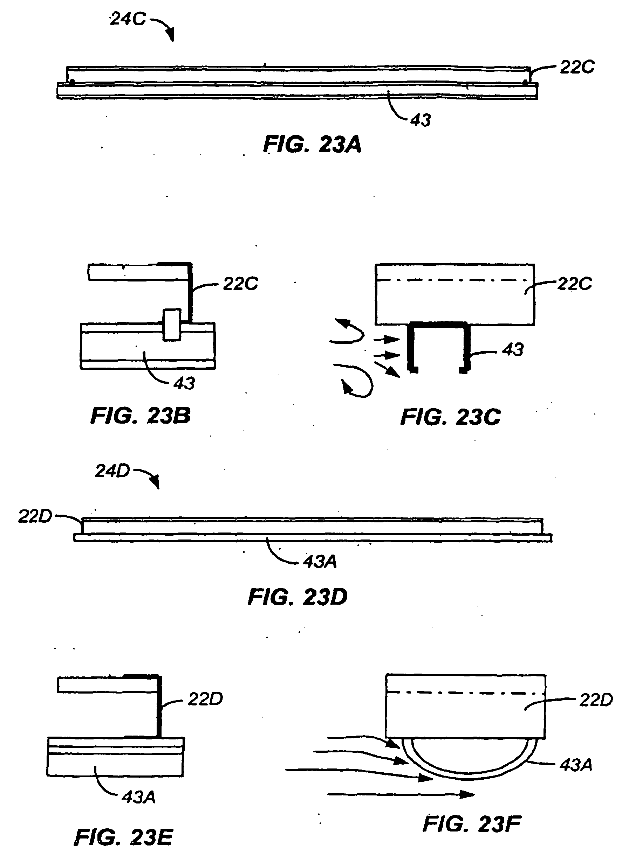

Figs. 23A-23C demonstrate how the shape of the structural member 43 that is attached to PV module support frame 22C can have an impact on wind resistance. Although not shown in Figs. 23A through 23C, structural members 43 are mounted to the roof or other support surface by space-apart supports so that air easily passes under the structural members. In Fig. 23C, the arrows represent wind hitting structural members 43. Because the 'C' shape of the structural member does not have an aerodynamic geometry; large drag forces result when wind hits the structural member in the orientation shown. Figs. 23D-23F show the preferred approach, where the 'C' shape of structural member 43 is replaced with a profile with rounded edges for structural member 43A, which will reduce drag on structural member 43A, and hence reduce drag on PV assembly 24D.

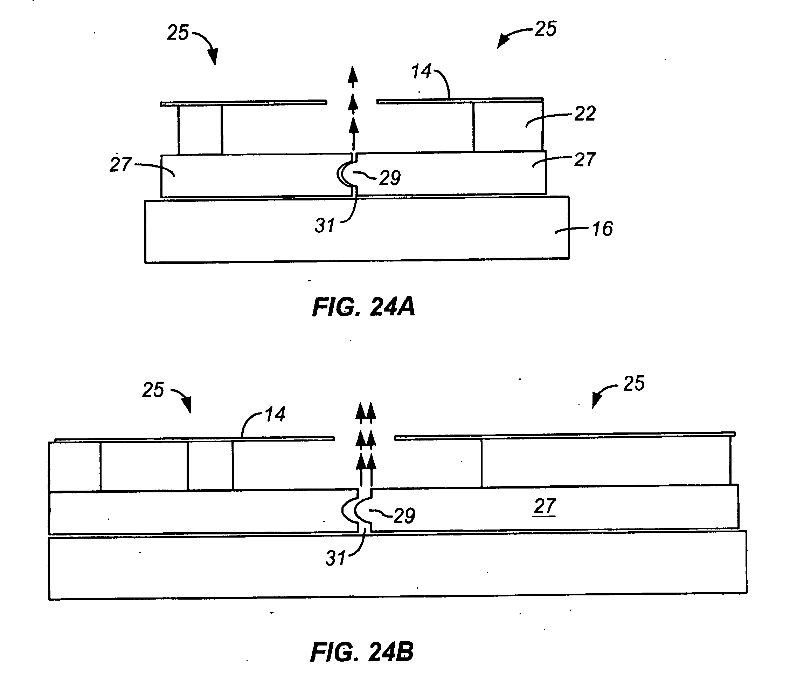

Figs. 24A and 24B each illustrates a pair of insulated PV assemblies 25 comprising supports 22 mounting PV modules 14 to an insulated base 27, assembly 25 being supported by support surface 16. Assemblies 25 are interlocked through the use of tongue-and-groove interlocking structure 29. In Fig. 24A a relatively small gap 31 is formed between insulating bases 27. The relatively small gap 131 restricts air flow and increases pressure equalization time.
The best wind performance is achieved with rapid pressure equalization. In contrast, Fig. 24B shows an increased gap 31 which reduces pressure equalization time and thus enhances wind performance. Also, incorporating through holes (not shown) in the insulating base 27 also provides pressure equalization paths to the region between base 27 and support surface 16 to help reduce pressure equalization time.

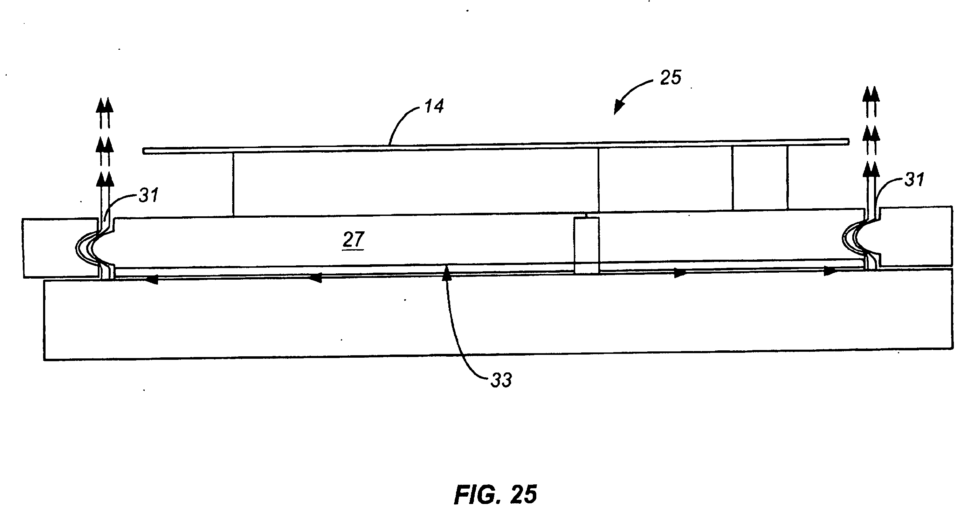

Fig. 25 shows structure similar to that of Fig. 24B of including small channels 33 under base 27 to promote flow under base 27 and through gaps 31 too promote rapid pressure equalization. It should, however, be emphasized that the height of channels 33 should be minimized so that the advantages provided by the flow passages created by channels 33 are not negated by the larger air volume needed to be equalized. The increase in air volume created by providing channels 33 can be and usually should be offset by increasing size of gaps 31 or adding holes in base 27, or both.

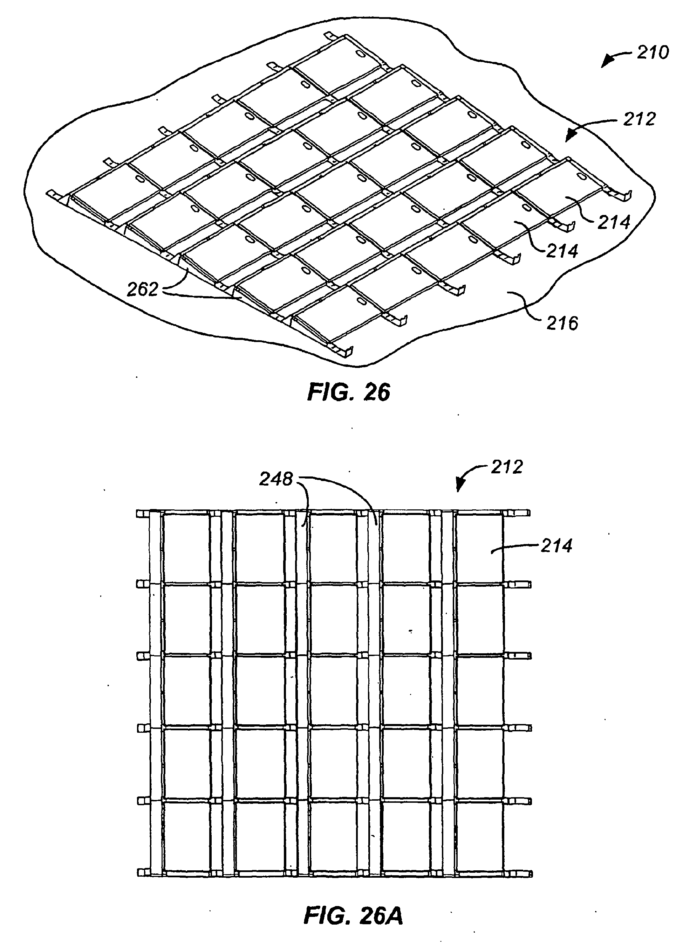

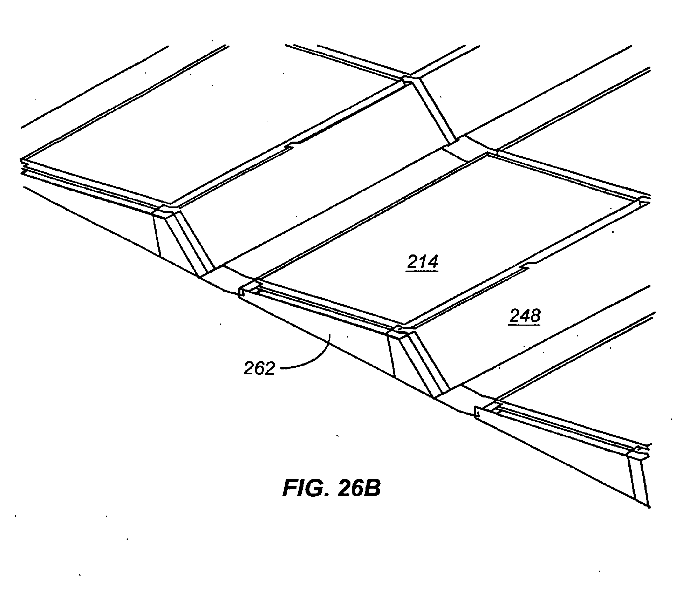

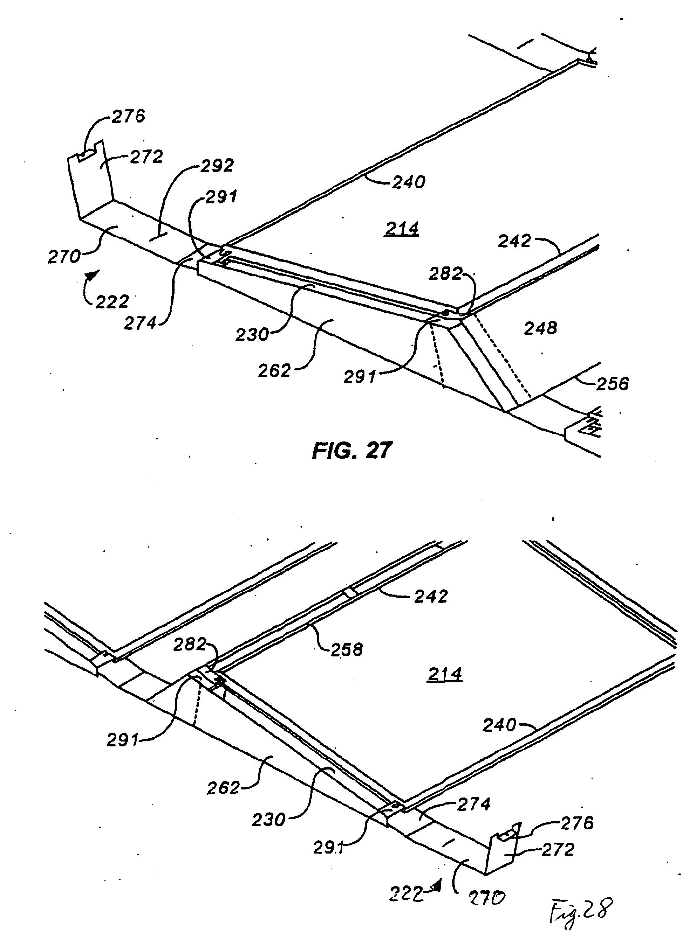

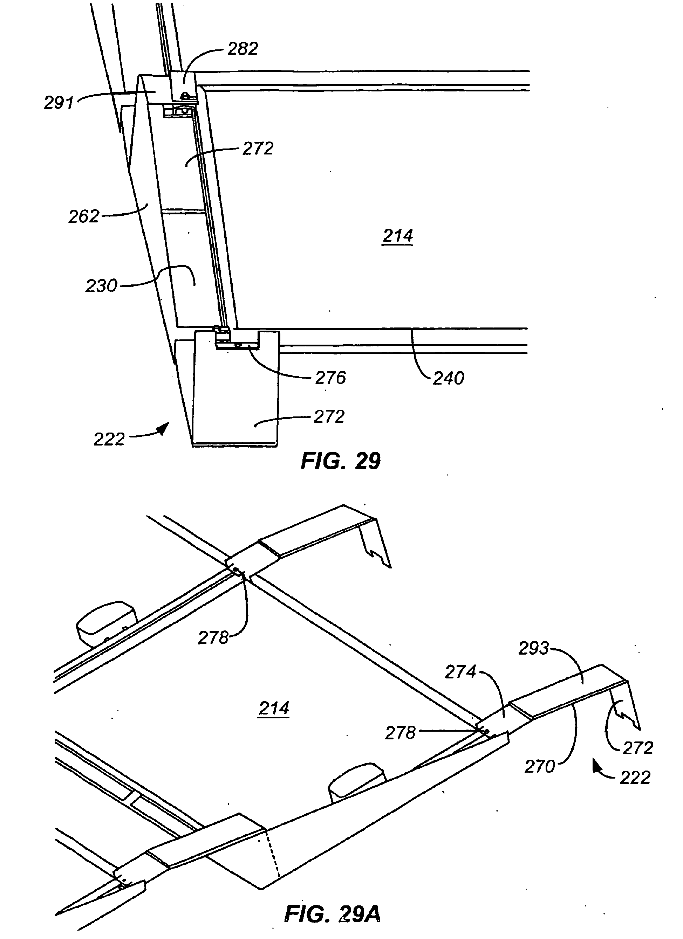

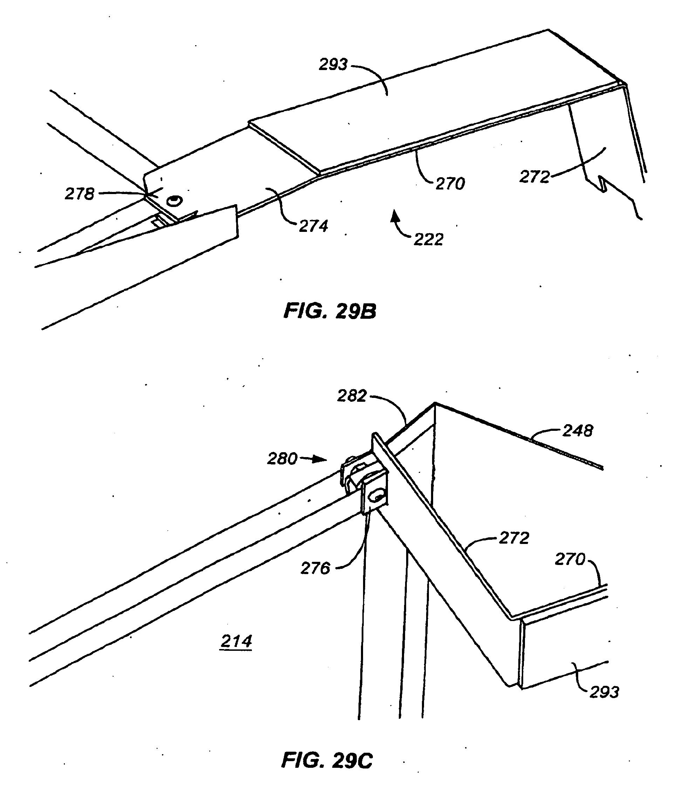

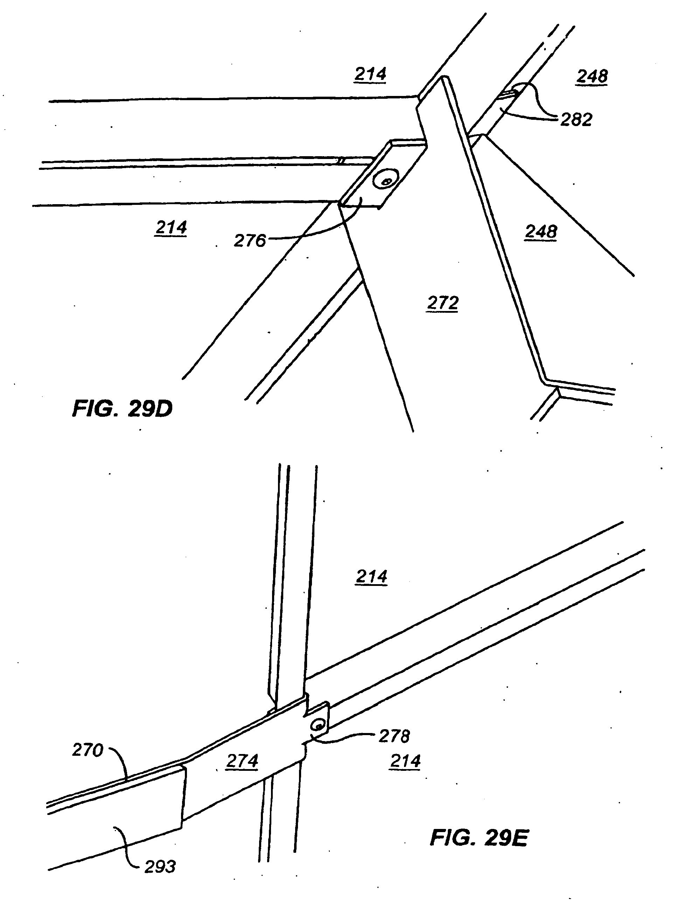

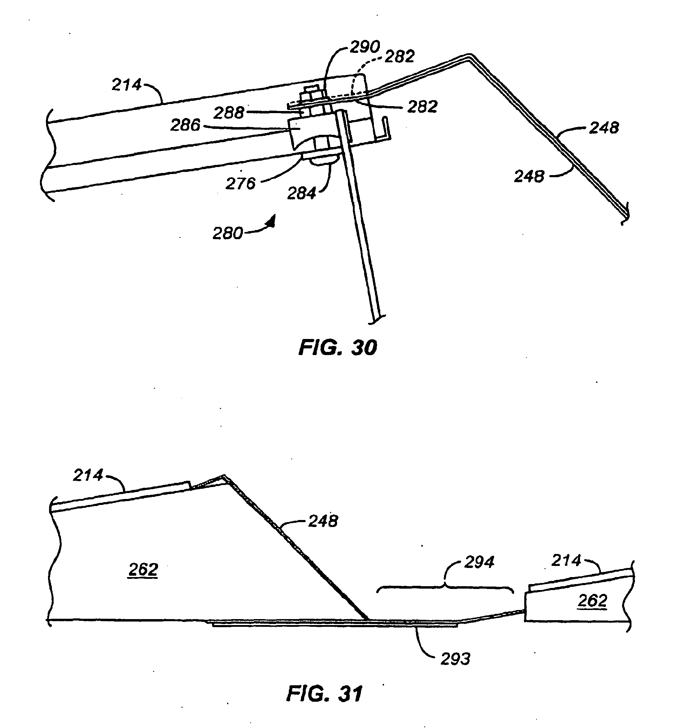

Figs. 26-31 disclose a further alternative example designed to facilitate the field assembly of an array 212 of sloped PV modules 214 to create a PV installation 210 with like reference numerals referring to like elements. Supports 222 are used to both support PV module 214 and to secure adjacent PV modules to one another. Each support 222 comprises a base 270, an upwardly extending upper edge support arm 272 and a moderately sloped lower edge support arm 274. Support arms 272,274 each have an apertured tab 276,278 (see Figs. 28 and 29A) extending therefrom used to support PV module 214 at upper and lower edges 242,240 of PV module 214. Fig. 30 illustrates fastening of upper edges 242 of two adjacent PV modules 214 to apertured tab 276 of upper support arm 272 and the overlapping apertured tabs 282 of two adjacent (and slightly overlapping) rear air deflectors 248 by a fastener 280. Fastener 280 includes a threaded stud 284, secured to and extending outwardly from tab 276, and a grounding clip 286, driven towards tab 276 by an inner nut 288. A metallic portion of each of the adjacent PV modules 214 is captured between clip 286 and tab 276. Apertured tabs 282 of rear air deflectors 248 are captured between an outer flange nut 290 and inner nut 288. The lower edge 256 of rear air deflector 248 has a tab which engages a slot 292 formed in base 270 of support 222. The lower edge 240 of PV module 214 is secured to support 222 using tab 278 and a fastener, similar to fastener 280, including a stud extending from tab 278, a grounding clip and a nut. Other mounting structures may also be used.

In the example of Figs. 26-31, PV modules 214 within each row of PV modules are adjacent to one another so that there is no air gap between them. However, side air deflectors 262 are secured to PV module 214 along the lateral edges of array 212. Side air deflectors 262 have inwardly extending slotted tabs 291 which are engaged by the fasteners along lower and upper edges 240 and 242 of PV modules 214. An air gap 230 is formed between side air deflectors 262 and the adjacent edges of PV module 214.

Support 222 is typically a bent metal support made of, for example, sheet metal, bent aluminum, extruded aluminum, stainless steel, or other metal. However, support 222 could also be made of plastic, concrete, fiberglass, or other material. Support 222 also includes a protective pad 293, typically made of rubber or some other suitable material, adhered to base 270. While pad 293 is an optional component of the assembly, pad 293 helps to prevent array 212 of PV modules 214 from scratching or otherwise damaging support surface 216. As shown in Fig. 31, adjacent rows of PV modules 214 can be spaced apart sufficiently to provide a walkway 294 between the rows.

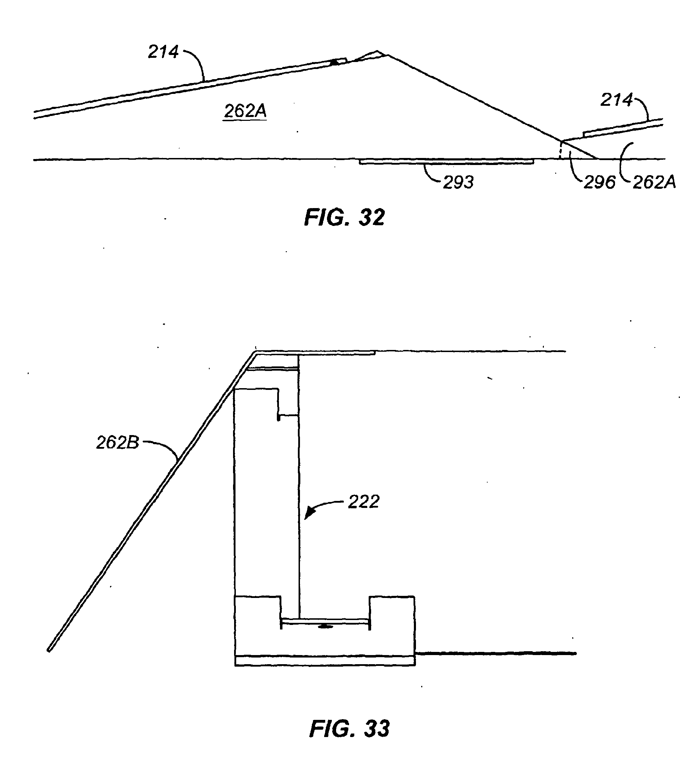

Fig. 32 discloses a further alternative example using extended side air deflectors 262A, the extended side air deflectors overlapping somewhat at 296. Using this type of side air deflector may eliminate the need for using a curb, or other peripheral barrier, surrounding array 212.

Fig. 33 illustrates a further example in which the side air deflector is an angled side air deflector 262B. Such an angled side air deflector is presently preferred; however, manufacturing problems are typically greater than with the vertical side air deflectors.

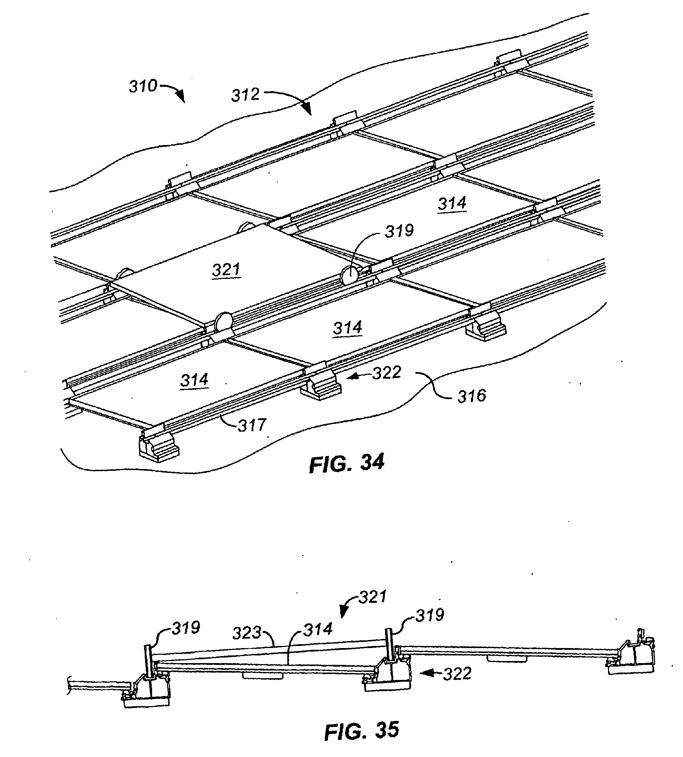

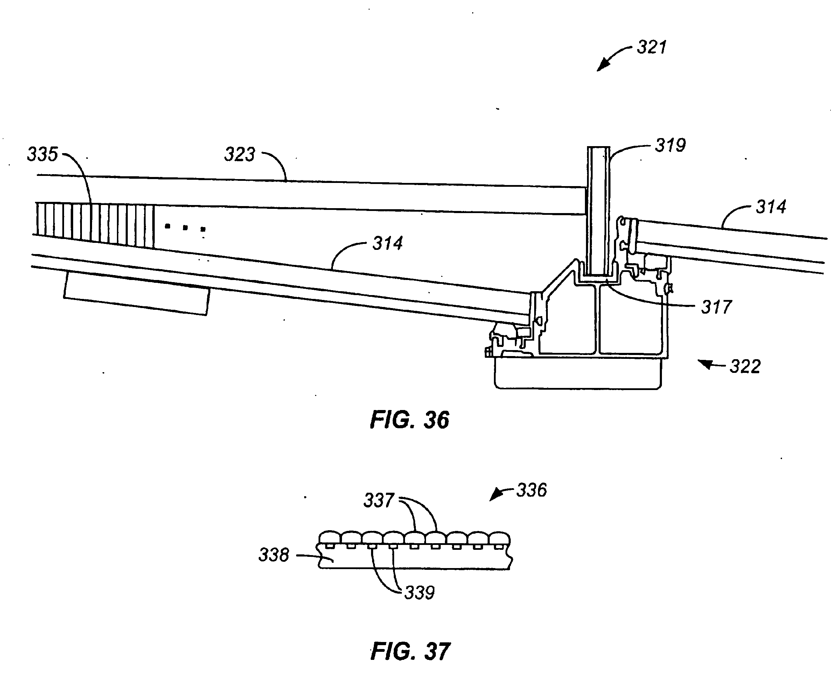

Figs. 34-36 illustrate a still further example PV installation 310 comprises an array 312 of PV modules 314 mounted on a support surface 316. Supports 322 are designed to not only support PV modules 314 and join adjacent PV modules 314 to one another, but also to support U-channel tracks 317 extending between supports 322. U-channel tracks 317 are used to support the wheels 319 of an access cart 321, the wheels being mounted to a cart body 323. Access cart 321 may be used for cleaning, maintenance, and repair of PV array 312 and to otherwise provide access to otherwise generally inaccessible regions of the array. Cart 321 may carry brushes 335 (see Fig. 36), sprayers or other cleaning devices to clean PV modules 314. Cart 321 may be self-propelled, manually propelled, automatically controlled, manually controlled or combination thereof. PV modules 314 are shown at a slight incline; other angles, from no incline to a greater incline can also be used. If desired, wheels 319 may be different diameters to provide sufficient clearance when PV modules 314 are inclined. Also, supports 322 may be designed to support two U-channel tracks 317 at different elevations when PV modules 314 are inclined.
Instead of wheels 319, skids or pads riding along U-channel tracks 317 could support cart 321. Cart 321 may be motorized or moved using, for example, poles, cables, chains or ropes. The movement of cart 321 may also be remotely controlled using, for example, a global positioning system (GPS). Cart 321 may also span more than one rowof PV modules 314.

The above disclosed example disclose the use of conventional PV modules. If desired, the PV modules could be of the light concentrator type. Light concentrator types of PV modules 336, see Fig. 37, typically have an array of lenses 337 or other light concentrators positioned above the PV substrate 338 so to increase the intensity of the light received by the PV substrate. This permits the percentage of the active, electricity-generating area 339 of the PV substrate to be reduced when compared with non-light-concentrator types of PV substrates. This helps to make using more efficient electricity-generating materials on the PV substrate more cost- effective.

To gain a better understanding of the relative contribution of pressure equalization and aerodynamic forces to the wind performance of PV systems, Computational Fluid Dynamics (CFD) simulations combined with wind tunnel studies have been performed on flat PV modules (see Figs. 1-8) and sloped PV modules (see Figs. 9-15), with and without an insulating foam base.
The effects of the volume-to-gap area ratio on pressure equalization and the effects of PV geometry on aerodynamic forces have been quantified and are discussed below.

Several discoveries have been made, and can be roughly categorized as improvements in the understanding of 1) Pressure Equalization, 2) Aerodynamices, and 3) Other: Weight, Interconnection, Friction, Yield Mechanisms.

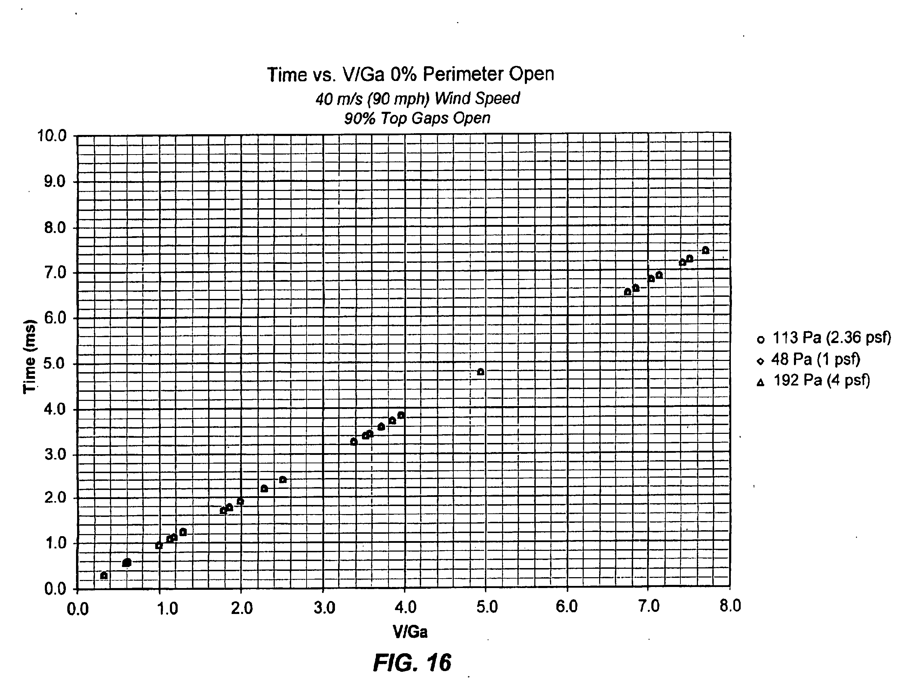

The following discussion will refer to the results of testing summarized in Fig. 16-21.

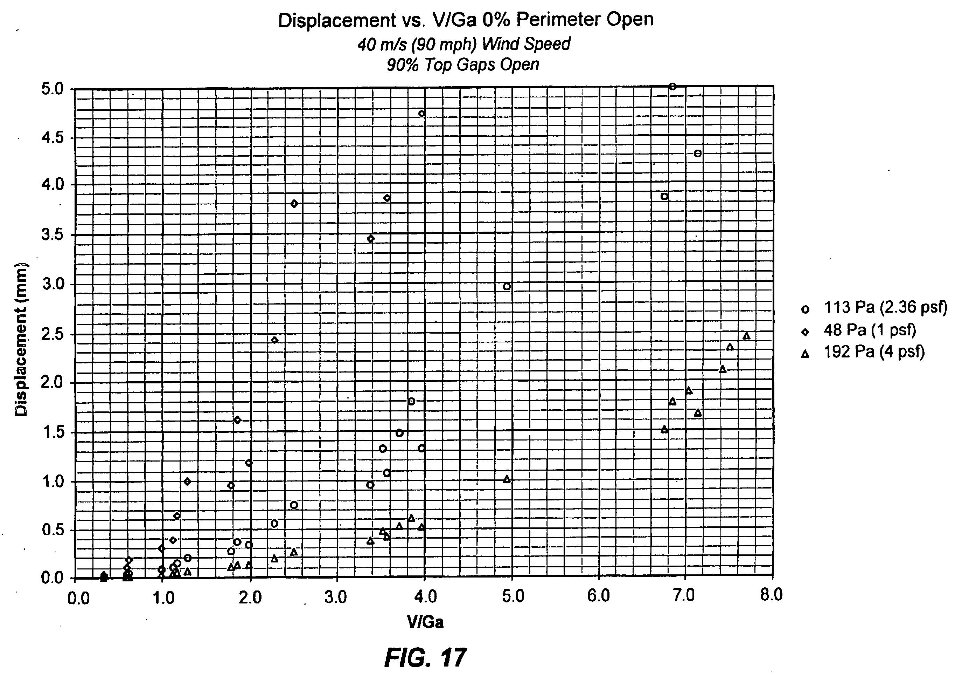

Fig. 16 demonstrates two key issues: (1) the time to equalize pressures above and below the PV module is strongly dependent upon the ratio V/Ga, and (2) the time to equalize pressures is a function only of geometry and is not dependent upon the weight of the system. In Figs. 16 and 17 V = the air volume beneath the array while Ga = the unobstructed gap area opening into the air volume region. Rapid equalization of pressures above and below the PV module is desirable. If equalization occurs rapidly, the inertia of the PV system will be able to resist the pressure fluctuations caused by dynamic wind flow. If pressure equalization takes a long time to occur, the inertia of the system will eventually be overcome, and the PV system will experience displacement.

The weight of the system does not play a role in the pressure equalization time; however it is one of the governing mechanisms in limiting the displacement that occurs during the pressure equalization process. The other governing mechanism is the V/Ga ratio. This is demonstrated by Fig. 17. This graph shows that a heavier system will have less displacement than a lighter system with the same V/Ga ratio and perimeter spacings. It is desirable to limit the displacement that a PV system will experience during wind pressure fluctuations, because the strain on the structural components will be minimized, thereby minimizing the risk of a failure.

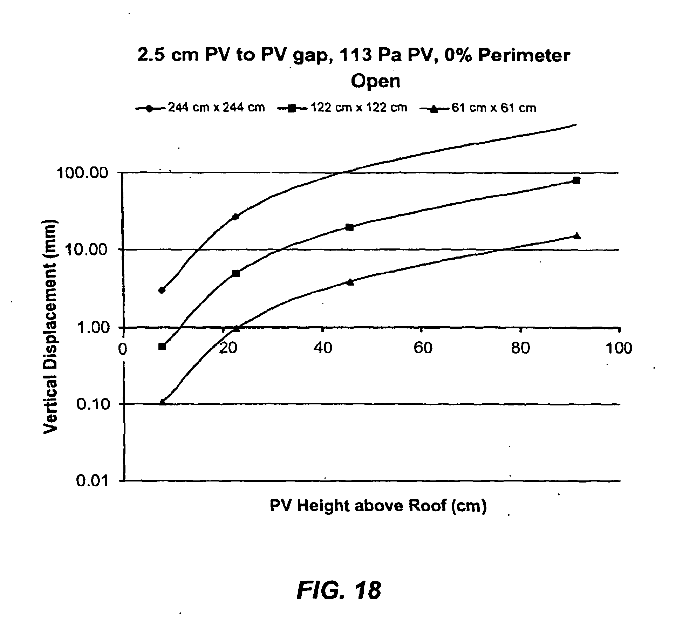

Figs. 18 through 20 demonstrate the effect of PV size on the vertical displacement that would occur, based on CFD simulation, during the pressure equalization period, as well as the effect of gap spacing between PV modules on vertical displacement. Assuming that the same gap between PV modules is used, and that the PV is installed the same height above the roof, smaller PV modules will have more gap area on the surface of the PV array than larger PV modules.

Fig. 18 shows displacements of PV modules of various sizes, for various heights above the roof. The graph shows that a 61 cm by 61 cm (24"by 24") array of PV modules with a 2,51 cm (1") gap between adjacent PV modules, and a height of 23 cm (9") between the PV modules and the roof, a displacement of 1 mm can be expected. For an array of 1,2 m by 1,2 m (48"by 48") PV modules with the same 2,51 cm (1") gap between PV modules and 9"height above the roof, a displacement of about 5 mm would occur, and an array of 2,4 m by 2,4 m (96"by 96") modules with similar geometry would experience a vertical displacement of 27 mm.

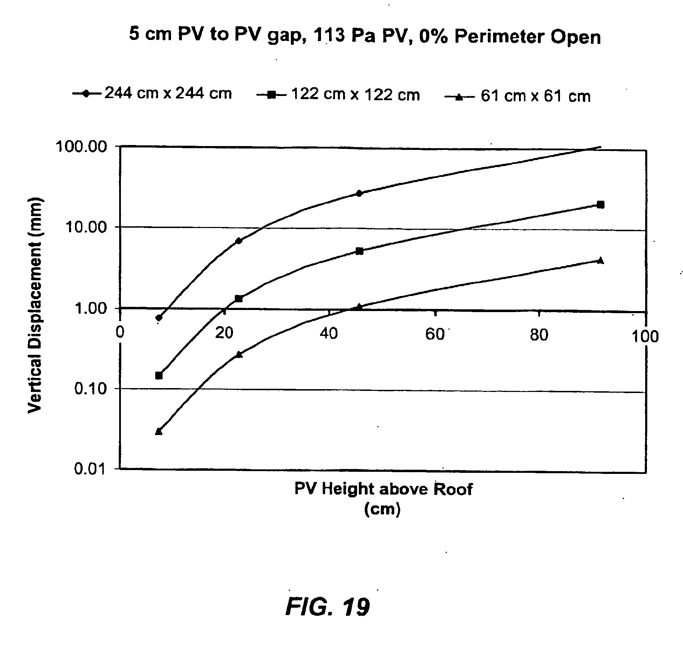

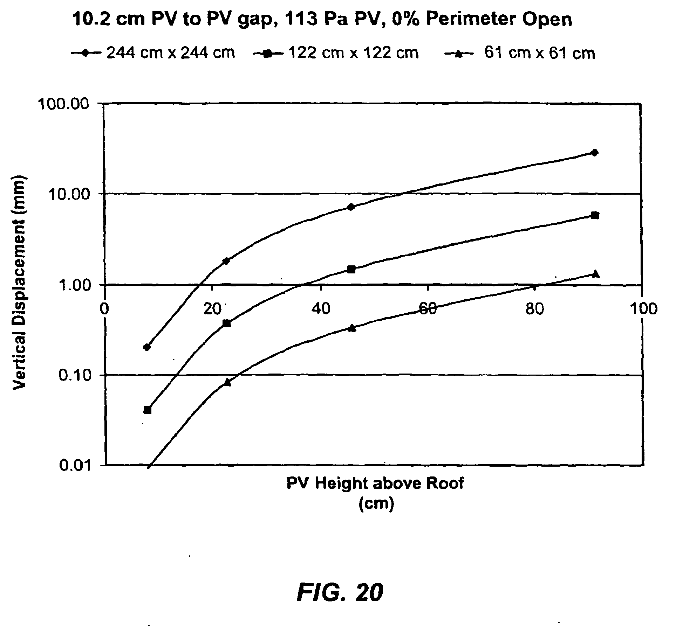

The effect of the gap spacing between PV modules can be seen by comparing the data in Figs. 18 through 20. From Fig. 18, a 2,4 m by 2,4 m (96"by 96") PV module weighing 113 Pa (2.36 psf), with a 7,6cm (3") height above the roof and 2,51 cm (1") gap spacing between PV modules would experience a 3mm vertical displacement. Fig. 19 shows that if the gap between PV modules were increased to 5 cm (2"), a vertical displacement of 1 mm would be expected. Fig. 20 shows that if the gap were increased to 10 cm (4"), a displacement of 0.2mm would be expected. This demonstrates the benefit of increasing the gap area on the surface of the PV system -- the ratio of V/Ga is reduced, and pressure equalization time as well as vertical displacement is minimized.

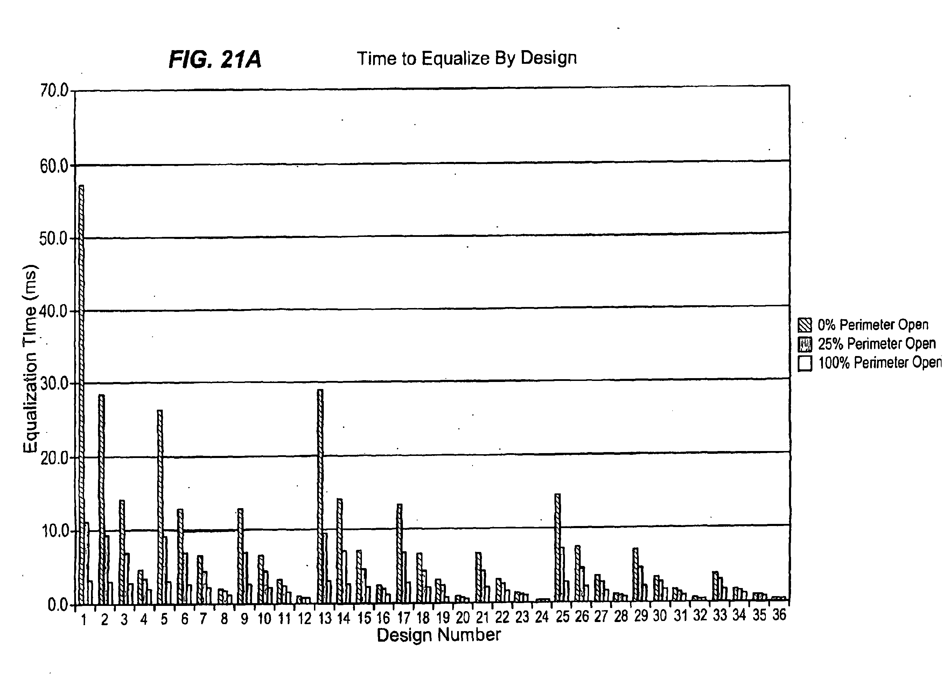

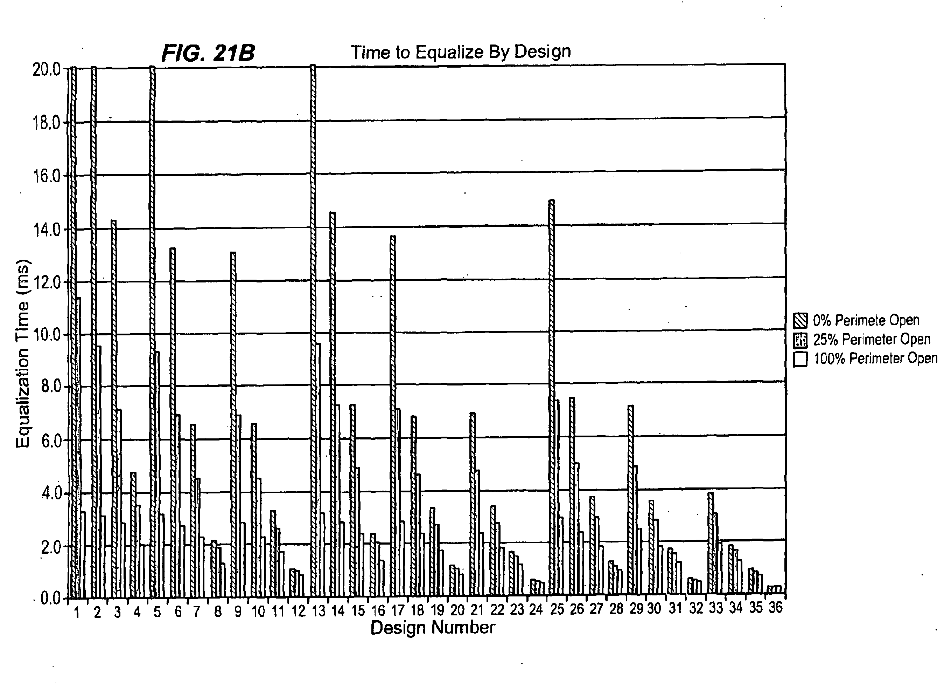

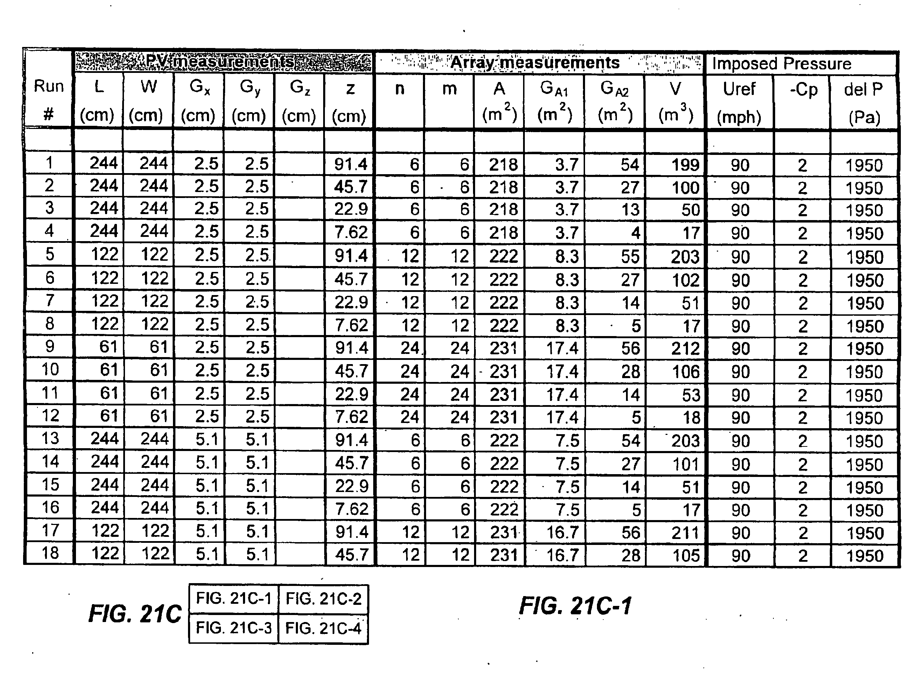

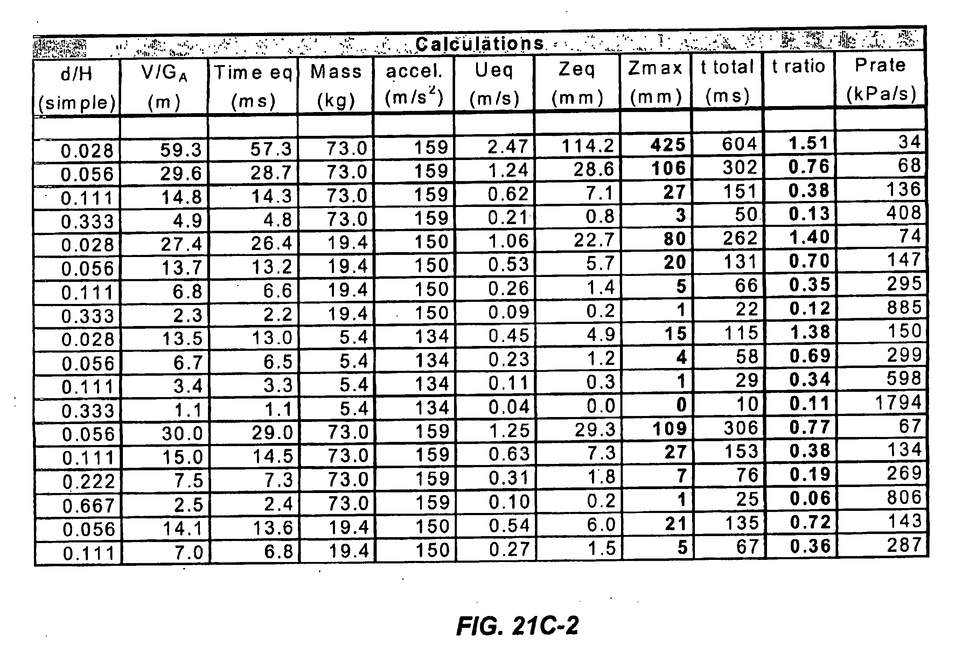

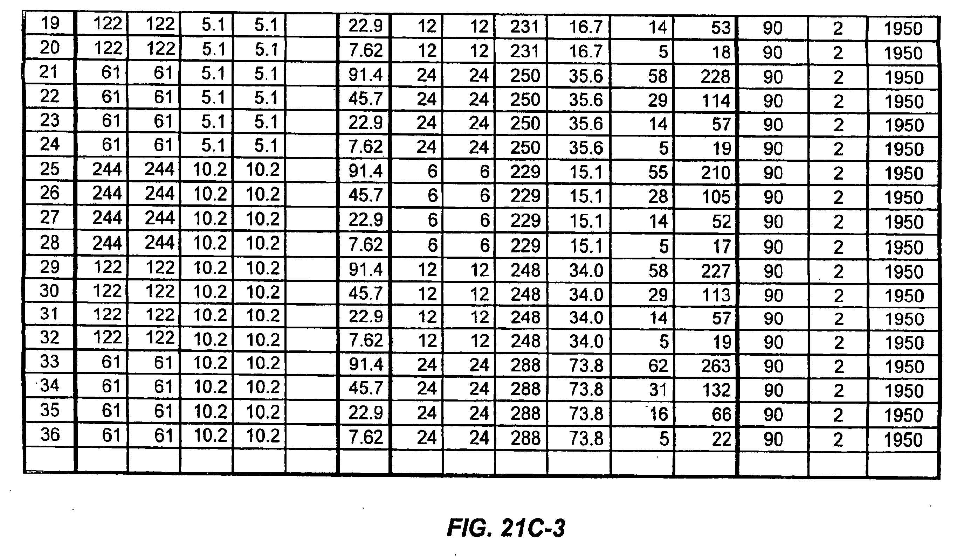

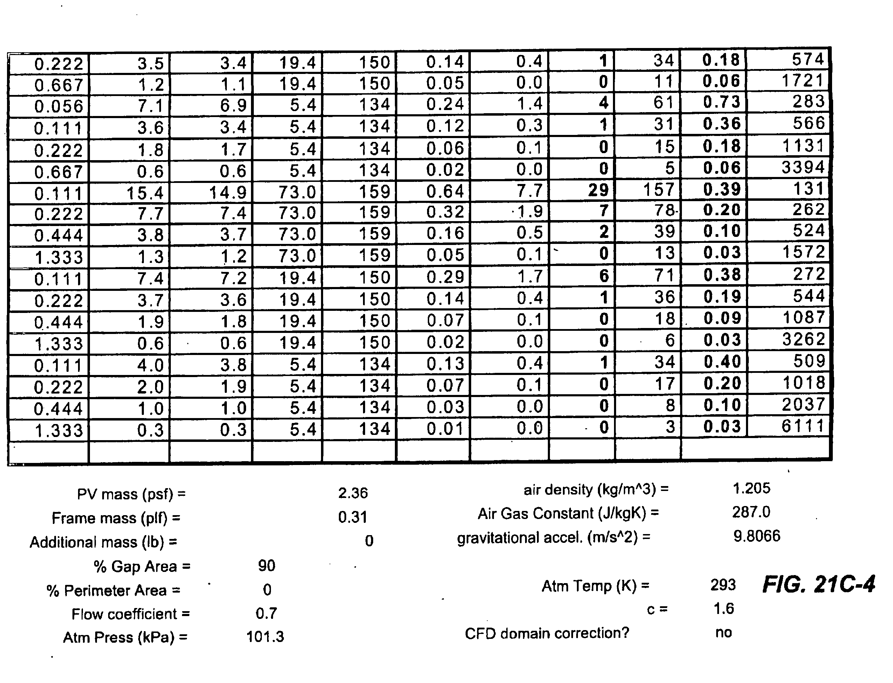

Figs. 21 A, B, and C are based on calculations and are used to demonstrate the effect of the perimeter spacing. If there is no obstruction to the flow of air from beneath a perimeter tile through the perimeter gap (as shown in Fig. 6, item 34), then the perimeter is 100% open. If an object blocks the perimeter gap area, the ratio of the blockage to the original perimeter gap area can be determined as a percentage. Figs. 21A and B show the pressure equalization time for various designs (any one design has the same PV area, gap spacing, PV weight, and height above the roof). The y-axis in Fig. 21A goes up to 70 ms, while in Fig. 21B the y-axis is limited to 20 ms for clarity. Fig. 21C is a table of the raw data used for Figs. 21A and B, so that the geometry for each design can be viewed. For each design, the pressure equalization time is given for various percentages of perimeter gap openness, including 0%, 25% perimeter blockage, and 100% perimeter open. These Figs. demonstrate that the less blockage at the perimeter, the faster pressure equalization will be.

### DESIGN CONSIDERATIONS

### A. Pressure Equalization

1. There is a strong dependence of the volume-to-gap area ratio of the PV system. The volume refers to the volume of air under the entire PV system (for example air volume V). The gap area refers to the sum of all gap areas between modules, and the gap area between the top edges of the PV modules and the roof surface (for example module gap area 26 plus perimeter gap area 28). Note that some part of these gap areas is commonly obstructed by the PV support system (for example PV modules supports 22). The obstruction of the support system is accounted for by deducting the areas blocked by supports from the gap area when calculating the volume-to-gap area ratio. Therefore, in the following equations gap areas are intended to refer to the unobstructed gap area for particular region. The volume-to-gap ratio (for example ratio R, R = V divided by (MGA + PGA) should be kept as small as possible for optimal wind performance (reference Figs. 16 and 17). The ratio (with volume measured in meters cubed and area measured in meters squared) is preferably less than about 20 meters, more preferably less than about 10 meters, even more preferably less than about 2 meters and further more preferably less than about 1 meter. The V/Ga may be selected as follows. A graph similar to Fig. 17 can be created for any weight of PV module. For a given weight of PV module, this graph should be checked to determine a V/Ga ratio that restricts the vertical displacement to preferably 50 mm, more preferably less than about 25 mm, and further more preferably less than about 1mm. The V/Ga ratio that is selected should then be cross-referenced on the graph shown in Fig. 16. The equalization time for the selected V/Ga as shown on Fig. 16 should be determined. This value should be preferably less than 20 ms, more preferably les than 8 ms, and further preferably less than 1 ms. If the originally selected V/Ga is higher than the preferred value shown described above, the lower of the two V/Ga values should be selected. Note that PGA will typically be some small fraction of MGA, and can be zero. The system would probably not work as desired if MGA was zero and all the gap existed in the PGA component. To limit displacement of the PV system, the appropriate ratio R is also dependent on the weight per unit area of the PV system. This is illustrated in the following section entitled Summary of Design Considerations.

2. Stated another way, the volume refers to the volume of air under the entire PV system (for example air volume V). The gap area IGAP defined as the sum of all gap areas between solid surfaces (e.g. PV modules) located within the array when viewed from vertically above the array. For example, IGAP for Fig. 1 is equal to MGA 26 while IGAP for Fig. 9 is equal to the sum of MGA 126, ADGA 160 and D/DGA 164. The gap area PGAP refers to the sum of all gap areas at the perimeter of the array, further defined as the lesser of 1) the area between the top edges of the PV modules and the roof surface (perimeter gap area (PGA) 28) or 2) the area between the top edges of the PV modules and a perimeter deflector device (perimeter gap area 30 (D/MGA)). Note that some part of these gap areas is commonly obstructed by the PV support system (for example PV modules supports 22). The obstruction of the support system is accounted for by deducting the areas blocked by supports when calculating IGAP and PGAP. Therefore, in the following equations gap areas are intended to refer to the unobstructed gap area for particular region. The volume-to-gap ratio (for example ratio R, R = V divided by (IGAP + PGAP) should be kept as small as possible for optimal wind performance (reference Figs. 16 and 17).

3. It may be desirable to equalize pressure in 10-20 ms or less, so that the inertia of the PV modules is sufficient in resisting displacement during wind gusts;

4. It may be desirable to limit PV vertical displacement to 2 - 5 mm, or less, unless flexible, fatigue-resistant interconnections are used.

5. A PV-deflector gap (for example perimeter gap 34) of 2.5 cm or more may be desirable to reduce wind uplift on a sloped PV module with or without foam insulation.

6. Larger gap spacings between PV modules enhance wind performance (reference Figs. 18, 19 and 20). However, increasing the gap spacing has a limit, as gaps create opportunity for positive pressure build-up under the PV system, for which one must proceed to aerodynamic solutions, e.g. using air deflectors at the gaps and aerodynamic components to reduce resistance to air flow into air volume V. Gaps must be strategically placed to avoid regions that experience positive pressures, such as any surface that is not parallel to the roof. Gaps should be protected from wind penetration under the PV system through the use of wind deflectors.

7. Maintaining a gap between a perimeter curb and the PV modules, so that air can flow through it, is beneficial to wind performance. This is shown as % perimeter open in Figs. 21A, 21B and 21C for various PV designs. 0% perimeter open means the perimeter is completely blocked. 100% perimeter open means the perimeter is completely open to air flow, however this should be accomplished by having a perimeter wind deflector adjacent to the PV modules, but preferably offset from the PV modules a distance equivalent to the PV distance from the roof surface.

8. Smaller PV modules equalize pressures faster than larger modules (assuming the same gap spacing between modules) due to the larger gap area across the array surface, which promotes air flow and rapid equalization.

9. Pressure variations across the PV array (spatial pressure variations) occur even in laminar wind flow. Pressure equalization is enhanced by promoting flow of air under the PV module and/or under an insulating base, while simultaneously limiting the volume of air that can exist in these regions. For example, supports under the PV module should be as small as possible. Also, small grooves under an insulating foam base may enhance pressure equalization if the increase in air volume could be offset by an increase in gap area (see Fig. 24).

10. Similarly to item (8), for products with insulation board, larger gaps between gaps in the insulating foam, or drilling holes in the foam just under the gap between PV modules would increase pressure equalization (see Fig. 25).

11. Pressure equalization, between the upper and lower surfaces of the PV assemblies of an array of PV assemblies, may be aided in the following manner. An array of PV assemblies supportable on a support surface is chosen. At least some of the PV assemblies comprise (1) an inclined PV module having a lower edge, an upper edge and inclined side edges joining the lower and upper edges, and (2) an air deflector having inclined deflector side edges and an upper deflector edge opposite the upper edge of the inclined PV module and defining a gap therebetween. The array of PV assemblies define a circumferentially closed perimeter, an array air volume V defined between the array of PV assemblies and the support surface, a module gap area MGA defined between the PV modules, a perimeter gap area PGA defined along the perimeter between the PV assemblies and the support surface, a deflector/deflector gap area D/DGA defined between opposed ones of the inclined deflector side edges, and an air deflector gap area ADGA defined between the upper edges of the air deflectors and the upper edges of the PV modules. Note that PGA may be zero. A ratio R, R = V divided by (MGA + ADGA+PGA+ D/DGA) is determined. If ratio R is not less than a chosen ratio, then changing at least one of V, MGA, ADGA, PGA and D/DGA should be pursued and the determining step is repeated. The chosen ratio may be, for example, no more than 20, no more than 10, no more than 2 or no more than 1. Side air deflectors may be used along the perimeter opposite the inclined side edges of a plurality of the inclined PV modules. Any deflector/module gap area D/MGA between the perimeter air deflectors and the perimeter is determined. An adjustment ratio AR, equal to D/MGA divided by PGA is determined. If AR is less than 1, then PGA is multiplied by AR to obtain a corrected PGA. The corrected PGA is used in the ratio R determining step.

12. Stated another way, pressure equalization between the upper and lower surfaces of the PV assemblies of an array of PV assemblies may be aided in the following manner. An array of PV assemblies supportable on a support surface is chosen. At least some of the PV assemblies comprise (1) an inclined PV module having a lower edge, an upper edge and inclined side edges joining the lower and upper edges, and (2) an air deflector having inclined deflector side edges and an upper deflector edge opposite the upper edge of the inclined PV module and defining a gap therebetween. Side air deflectors may be used along the perimeter opposite the inclined side edges of a plurality of the inclined PV modules. The array of PV assemblies define a circumferentially closed perimeter, an array air volume V defined between the array of PV assemblies and the support surface, an interior array gap area IGAP defined as the sum of all gap areas between solid surfaces located within the array when viewed from vertically above the array, and PGAP refers to the sum of all gap areas at the perimeter of the array, further defined as the lesser of 1) the area between the top edges of the PV modules and deflectors and the roof surface (perimeter gap area 128) or 2) the area between the top edges of the PV modules and any perimeter deflector device(perimeter gap area 130 (D/MGA)). Note that some part of these gap areas is commonly obstructed by the PV support system (for example PV modules supports 22). The obstruction of the support system is accounted for by deducting the areas blocked by supports when calculating IGAP and PGAP. Note that D/MGA may be zero. A ratio R, R = V divided by (IGAP + PGAP) is determined. If ratio R is not less than a chosen ratio, then changing at least one of V, IGAP and/or PGAP should be pursued and the determining step is repeated. The chosen ratio may be, for example, no more than 20, no more than 10, no more than 2 or no more than 1.

### B. Aerodynamics

1. Wind deflectors should be placed at any large entry points to the underside of the array to prevent wind penetration into the entry point. Wind deflectors should be as tall as the tallest adjacent components in the PV system to minimize drag forces on the PV system.
Preferably, wind deflectors should be sloped at an angle (this angle should be minimized, i. e. as close to parallel to the roof surface as possible) to cause wind to deflect to a point above the array, especially when placed around the perimeter. The perimeter air deflector may be locatable to surround and be spaced-apart from the perimeter. A deflector/module gap area D/MGA is determined between the perimeter air deflector and the perimeter. An adjustment ratio AR, equal to D/MGA divided by PGA, is computed. If AR is less than 1 , then PGA is multiplied by AR obtain a corrected PGA and the corrected PGA is used in the ratio R determining step.

2. All sloped PV systems would benefit greatly from having rear and side deflectors.
This is a major shortcoming of some conventional systems.

3. Since the wind acts throughout each system, it is important to pay attention to all assembly details to minimize their resistance to airflow (micro-aerodynamics).

4. The non-aerodynamic shape of the PV frame shown in Fig. 22 causes increased drag compared with the drag created by aerodynamic PV frames.

5. The non-aerodynamic shape of the C-channels supporting the PV frame illustrated in Fig. 23 causes increased drag and generally should be avoided.

6. A lightweight [<479 Pa( < 10 psf)], sloped PV system is unlikely to survive design wind speeds in any part of the US without the use of rear and side deflectors or a mechanism that functions according to item 2 below.
Other: Weight, Interconnection, Friction, Yield Mechanisms

1. Adding weight to the PV modules, especially modules at the perimeter of the array, will enhance wind performance (reference Fig. 17).

2. Interconnection of PV components will improve wind performance by distributing wind loads across the PV array. The more rigid the interconnects are, the more likely they can distribute these loads.

3. Increasing the friction coefficient between the roof and components in contact with it may increase the wind stability of a ballasted system. Increasing the surface area that comes in contact with the roof may also enhance wind performance.

4. If a yield mechanism is used (causing array elements to absorb the energy of windflow by'bending'in the wind), it must be fatigue-resistant, must function in gusty, turbulent wind flow, must have a response time measured in ms (low inertia), and must function in all wind directions before failure occurs. Once the mechanism engages, it must remain engaged until wind speeds are reduce to levels that will not cause failure.

5. It has been discovered that it is generally advisable to locate an array of roof- mounted PV modules away from the perimeter of the roof : 1,2 m (4 ft.) is acceptable, 2,4 m (8 ft.) is preferred and 3, 7m (12 ft.) is more preferred.

### SUMMARY OF DESIGN CONSIDERATIONS

### 1. General Statement:

### Permeability in the field of the array

1. Gaps in the fieldof PV modules enabling airflow between top and bottom side of PV module surfaces

### Add aerodynamic solutions around and within the array

1. means of substantially blocking horizontal windflow into the underside of the PV modules
   a. at perimeter of the array
   b. between modules within the array (particularly if sloped modules)

### Additional measures for improved performance

1. interengagement of the array
2. increase weight of the array
3. Location of array away from roof perimeter (worst spatial uplift)
   = > 4'acceptable
   = > 8'preferred
   12' best

### 2. More Specific Statement

### Permeability in the field of the array

1 a. Gaps in the field of PV modules enabling airflow between top and bottom side of PV module surfaces
Gaps defining an area A(m2)
Volume V(m3) defined by volume of air above the support surface, below PV module surface, and within array perimeter
W = average weight of the array in Pa

| | | acceptable | preferred | best |
|---|---|---|---|---|
| Overall: | V/A= < | 20 | 10 | 1 |
| (m) | | | | |
| More specifically | | acceptable | preferred | best |
| for W = < 287 Pa (6 psf) | V/A = < | 14 | 7 | 3 |
| for W = < 239 Pa (5psf) | V/A = < | 12 | 5.5 | 2.5 |
| for W = < 191 Pa (4 psf) | V/A = < | 9 | 4.5 | 2 |
| for W = < 113 Pa (2.36 psf) | V/A = < | 7 | 3.5 | 1.5 |
| for W = < 111 Pa (1 psf) | V/A = < | 3 | 1.5 | 0.75 |

1 b. Maximum average height off of the roof as a function of PV module area and PV to PV gap

| avg 2,5cm (1") gap | avg 5 cm (2") gap | avg 10 cm (4") gap |
|---|---|---|
| PV size(m) max better | max better | max better |
| 61 cm by 61 cm (24x24") 0,4m(15") 2 dm (8") | 51 cm (20") 25 cm (10") | 076 cm (30") 51 cm (20") |
| 1,2 m by 1,2 m (48x48") 0,1 m(5") 6,4cm (2.5") | 25 cm (10") 1 dm (5") | 38 cm (15") 25 cm (10") |
| 2,4 m by 2,4 m (96x96") 6,4 cm(2.5") 3 cm(1") | 1 dm(5") 6.4 cm (2.5") | 2 dm (7") 1 dm (5") |

### 2. Preferred gaps sizes for pressure equalization

A. Gaps between Components (enabling air flow ultimately to roof deck below)
   1. PV to Perimeter Deflector/Curb/Windspoiler
      a. Gap size range: 0 to 100% of the height of the PV module
      b. Preferred gap size: 2,5 cm to 7,6 cm (1" to 3")
   2. PV to PV
      a. Gap size range:1,3 c, to 0,5 m (.5" to 20")
      b. Preferred gap size: 2,5 cm to 7,6 cm (1" to 3")
   3. PV to back deflector (sloped modules)
      a. Gap size range: 2,5 cm to 7,6 cm· (.5" to 6")
      b. Preferred gap size: 2,5 cm to 7,6 cm (1" to 3")
   4. PV to side deflector (sloped modules)
      a. Gap size range: 2,5 cm to 7,6 cm (.5" to 6")
      b. b. Preferred gap size: 2,5 cm to 7,6 cm (1" to 3")
B. Gap has low resistance to airflow

### Add aerodynamic solutions around and within the array

### 1. Means for blocking or disrupting windflow at perimeter

### A. Using a wind spoil device at array perimeter, such as deflector or curb or vortex generator, or other

If deflector or curb:
1. Preferably affixed to array, and shaped so that windflow pushes it into the support surface
2. Preferably has air gap between itself and first PV module for ventilation, min1" preferred
3. Substantially blocks wind from flowing below PV module surface
4. Preferred gap between deflector and roof surface at perimeter: Flush with roof
5. Could be weighted to the roof
6. Could be fixed to roof, e. g. adhered, bolted
7. Could be permeable
8. Could be made of metal, concrete, plastic or other
9. Deflector angle range: 0 to 70 degrees
10. Preferred deflector angle: 10-50 degrees

### 8. Side deflectors for sloped tiles

1. Deflector angle range: 0 to 70 degrees
   2. Preferred deflector angle: 10-50 degrees
2. Means for blocking or disrupting windflow at interior of array

### A. Using a wind spoil device within array, such as deflector or curb or vortex generator, or other

If deflector or curb:
1. Preferably affixed to array, and shaped so that windflow pushes it into the support surface
2. Substantially blocks wind from flowing below PV module surface
3. Preferred gap between deflector and roof surface at perimeter: less thanl/2"
4. Could be permeable
5. Could be made of metal, concrete, plastic or other
6. Deflector angle range: 0 to 70 degrees
7. Preferred deflector angle: 0-50 degrees

### B. Addition of a gap between deflector and next PV for a walkway and/or cleaning machine

1. Preferred walkway width 8 cm - 61 cm (3-24")
2. Preferred deflector angle: 10 cm -20 cm (4-8")

### C. Addition of rails to support array cleaning function

1. Preferred walkway width 8 cm - 61 cm (3-24")
2. Preferred deflector angle: 10 cm -20 cm (4-8")
3. Means of lowering resistance to airflow throughout the assembly to facilitate fast pressure equalization

### A. Components

1. Aerodynamic profile (I. e. low resistance to airflow) for all component surfaces (e. g rails, frame edges, support spacers)
   A. Spacers
   B. Module Frames
      1. Frameless
      2. low profile, aerodynamic frames
   C. Rails
      1. no rails
      2. low profile
      3. 3. holes in the rails
   D. Deflectors or deflector curbs
*add other measures to reinforce the integrity of the array*
1. Array interengagement
2. Added Weight
   = < 4 x 20²Pa (8 psf) acceptable
   = < 2 x 10²Pa (5 psf) preferred
   = < 1 x 10²Pa (3 pst) best
Additional product improvements
1. Add radiant barrier for improved thermal performance
2. Add insulation block

## Claims

1. A method for achieving adequate pressure equalization between upper and lower surfaces (16; 116; 216; 316) of PV modules (14; 114; 214; 314) of an array (12; 112; 212; 312) of PV modules (14; 114; 214; 314) with at least one perimeter deflector device) the method comprising:
choosing an array (12; 112; 212; 312) of PV modules (14; 114; 214; 314) supported on and arranged generally parallel to a support surface (16; 116; 216; 316) by support members, the array (12; 112; 212; 312) of PV modules (14; 114; 214; 314) defining a circumferentially closed perimeter;
calculating an array air volume V defined between the array (12; 112; 212; 312) of PV modules (14; 114; 214; 314) and the support surface (16; 116; 216; 316); with volume measured in meters cubed and area in meters squared,
calculating an interior array gap area IGAP defined as the sum of all gap areas between solid surfaces (14; 114; 214; 314) located within the array (12; 112; 212; 312) when viewed from vertically above the array (12; 112; 212; 312);
**characterized in** calculating a perimeter gap area PGAP defined as the lesser of 1) the area PGA along the perimeter between the top edges of the PV modules (14; 114; 214; 314) and the support surface (16; 116; 216; 316) or 2) the area (D/MGA) along the perimeter between the top edges of the PV modules (14; 114; 214; 314) and the perimeter deflector device; and
determining a ratio R, R = V divided by (IGAP + PGAP) in a ratio R determining step; and if ratio R is not less than a chosen ratio, then:
changing at least one of V, IGAP and PGAP; and
repeating the determining step.

2. The method according to claim 1 further comprising; selecting the chosen ratio according to the weight per unit area of the array (12; 112; 212; 312) of PV modules (14; 114; 214; 314) and support members.

3. The method according to claim 2 wherein the determining step is carried out with the weight per unit area of the array (12; 112; 212; 312) of PV modules (14; 114; 214; 314) being less than or equal to 3 x 10² Pa (6 Ibs. per square foot) and the chosen ratio being no more than 20.

4. The method according to claim 1 wherein the choosing step comprises: selecting a perimeter air deflector (20) device located to surround the perimeter.

5. The method according to claim 1 wherein the determining step is carried out with the chosen ratio being no more than 20.

6. The method according to claim 1 wherein the determining step is carried out with the chosen ratio being no more than 10.

7. The method according to claim 1 wherein the determining step is carried out with the chosen ratio being no more than 2.

8. The method according to claim 1 wherein the determining step is carried out with the chosen ratio being no more than 1.

## Patentansprüche

1. Verfahren zum Erzielen von ausreichendem Druckausgleich zwischen Ober- und Unterseiten (16; 116; 216; 316) von PV-Modulen (14; 114; 214; 314) einer Anordnung (12; 112; 212; 312) von PV-Modulen (14; 114; 214; 314) mit wenigstens einer Außenrand-Abweiservorrichtung, wobei das Verfahren umfasst:
Auswählen einer Anordnung (12; 112; 212; 312) von PV-Modulen (14; 114; 214; 314), die von einer Tragefläche (16; 116; 216; 316) durch Trageelemente getragen werden und im Wesentlichen parallel dazu angeordnet sind, wobei die Anordnung (12; 112; 212; 312) von PV-Modulen (14; 114; 214; 314) einen am Umfang geschlossenen Außenrand aufweist;
Berechnen eines Luftvolumens V, das zwischen der Anordnung (12; 112; 212; 312) von PV-Modulen (14; 114; 214; 314) und der Tragefläche (16; 116; 216; 316) gebildet wird, wobei das Volumen in Kubikmeter und die Fläche in Quadratmeter gemessen werden,
Berechnen einer inneren Spaltfläche (interior gap area - IGAP), die als die Summe aller Spaltflächen zwischen massiven Flächen (14; 114; 214; 314) definiert ist, die sich, vertikal von oberhalb der Anordnung (12; 112; 212; 312) gesehen, innerhalb der Anordnung (12; 112; 212; 312) befinden;
**gekennzeichnet durch** Berechnen einer Außenrand-Spaltfläche (perimeter gap area - PGAP), die als die kleinere von
1. der Fläche PGA an dem Außenrand zwischen den Oberkanten der PV-Module (14; 114; 214; 314) und der Tragefläche (16; 116; 216; 316) oder
2. der Fläche (D/MAG) an dem Außenrand zwischen den Oberkanten der PV-Module (14; 114; 214; 314) und der Außenrand-Abweiservorrichtung definiert ist; und
Bestimmen eines Verhältnisses R, wobei R = V dividiert **durch** (IGAP + PGAP) in einem Schritt zum Bestimmen des Verhältnisses R;
und wenn das Verhältnis R nicht kleiner ist als ein ausgewähltes Verhältnis, dann
Ändern wenigstens von V, IGAP oder PGAP; und
Wiederholen des Bestimmungsschrittes.

2. Verfahren nach Anspruch 1, das des Weiteren ein Auswählen des gewählten Verhältnisses entsprechend dem Gewicht pro Flächeneinheit der Anordnung (12; 112; 212; 312) von PV-Modulen (14; 114; 214; 314) und Trageelementen umfasst.

3. Verfahren nach Anspruch 2, wobei der Bestimmungsschritt so ausgeführt wird, dass das Gewicht pro Flächeneinheit der Anordnung (12; 112; 212; 312) von PV-Modulen (14; 114; 214; 314) kleiner ist als oder genauso groß wie 3 x 10² Pa (6 Ibs. pro squarefoot) und das gewählte Verhältnis nicht größer ist als 20.

4. Verfahren nach Anspruch 1, wobei der Schritt des Wählens umfasst:
Auswählen einer Außenrand-Luftabweiservorrichtung (20), die so angeordnet ist, dass sie den Rand umgibt.

5. Verfahren nach Anspruch 1, wobei beim Ausführen des Bestimmungsschritts das gewählte Verhältnis nicht größer ist als 20.

6. Verfahren nach Anspruch 1, wobei beim Ausführen des Bestimmungsschritts das gewählte Verhältnis nicht größer ist als 10.

7. Verfahren nach Anspruch 1, wobei beim Ausführen des Bestimmungsschritts das gewählte Verhältnis nicht größer ist als 2.

8. Verfahren nach Anspruch 1, wobei beim Ausführen des Bestimmungsschritts das gewählte Verhältnis nicht größer ist als 1.

## Revendications

1. Procédé pour obtenir une égalisation de pression adéquate entre les surfaces supérieures et inférieures (16 ; 116 ; 216 ; 316) de modules photovoltaïques (14 ; 114 ; 214 ; 314) d'un réseau (12 ; 112 ; 212 ; 312) de modules photovoltaïques (14 ; 114 ; 214 ; 314) avec au moins un dispositif déflecteur périmétrique, le procédé comprenant les étapes consistant à :
choisir un réseau (12 ; 112 ; 212 ; 312) de modules photovoltaïques (14 ; 114 ; 214 ; 314) supportée sur et agencée de façon généralement parallèle à une surface de support (16 ; 116 ; 216 ; 316) par des éléments de support, le réseau (12 ; 112 ; 212 ; 312) de modules photovoltaïques (14 ; 114 ; 214 ; 314) définissant un périmètre fermé de façon circonférentielle ;
calculer un volume d'air de réseau V défini entre le réseau (12 ; 112 ; 212 ; 312) de modules photovoltaïques (14 ; 114 ; 214 ; 314) et la surface de support (16 ; 116 ; 216 ; 316) ; le volume étant mesuré en mètres cubes et la superficie en mètres carrés,
calculer une superficie d'espace de réseau intérieure IGAP définie comme la somme de toutes les superficies d'espace entre des surfaces solides (14 ; 114 ; 214 ; 314) positionnées à l'intérieur du réseau (12 ; 112 ; 212 ; 312) lorsque vues à partir du dessus du réseau verticalement (12 ; 112 ; 212 ; 312) ;
**caractérisé par** les étapes consistant à calculer une superficie d'espace périmétrique PGAP définie comme la superficie la moins importante parmi 1) la superficie PGA le long du périmètre entre les bords supérieurs des modules photovoltaïques (14 ; 114 ; 214 ; 314) et la surface de support (16 ; 116 ; 216 ; 316) ou 2) la superficie (D/MGA) le long du périmètre entre les bords supérieurs des modules photovoltaïques (14 ; 114 ; 214 ; 314) et le dispositif déflecteur périmétrique ; et
déterminer un rapport R, R = V divisé par (IGAP + PGAP) dans une étape de détermination du rapport R ;
et si le rapport R n'est pas inférieur à un rapport choisi, alors :
changer au moins un parmi V, IGAP et PGAP ; et
répéter l'étape consistant à déterminer.

2. Procédé selon la revendication 1, comprenant en outre l'étape consistant à : sélectionner le rapport choisi selon le poids par superficie unitaire du réseau (12 ; 112 ; 212 ; 312) de modules photovoltaïques (14 ; 114 ; 214 ; 314) et éléments de support.

3. Procédé selon la revendication 2, dans lequel l'étape de détermination est réalisée avec le poids par superficie unitaire du réseau (12 ; 112 ; 212 ; 312) de modules photovoltaïques (14 ; 114 ; 214 ; 314) inférieur ou égal à 3 x 10² Pa (6 livres par pied carré) et le rapport choisi n'étant pas supérieur à 20.

4. Procédé selon la revendication 1, dans lequel l'étape consistant à choisir comprend l'étape consistant à : sélectionner un dispositif déflecteur d'air périmétrique (20) positionné pour entourer le périmètre.

5. Procédé selon la revendication 1, dans lequel l'étape de détermination est réalisée avec le rapport choisi n'étant pas supérieur à 20.

6. Procédé selon la revendication 1, dans lequel l'étape de détermination est réalisée avec le rapport choisi n'étant pas supérieur à 10.

7. Procédé selon la revendication 1, dans lequel l'étape de détermination est réalisée avec le rapport choisi n'étant pas supérieur à 2.

8. Procédé selon la revendication 1, dans lequel l'étape de détermination est réalisée avec le rapport choisi n'étant pas supérieur à 1.
